**Europäisches Patentamt**

**European Patent Office**

**Office européen des brevets**

(19)

(11) Numéro de publication : **0 063 972**
**B1**

# (12) FASCICULE DE BREVET EUROPÉEN

(45) Date de publication du fascicule du brevet :
17.07.85

(21) Numéro de dépôt : 82400559.9

(22) Date de dépôt : 26.03.82

(51) Int. Cl.⁴ : **G 06 F 13/14**

(54) **Procédé et dispositif d'allocation d'une ressource dans un système comportant des unités de traitement de données autonomes.**

(30) Priorité : 08.04.81 FR 8107036

(43) Date de publication de la demande :
03.11.82 Bulletin 82/44

(45) Mention de la délivrance du brevet :
17.07.85 Bulletin 85/29

(84) Etats contractants désignés :
DE GB IT NL

(56) Documents cités :
FR-A- 2 376 464
GB-A- 1 217 355
US-A- 3 553 656
US-A- 4 177 450
US-A- 4 209 838
COMPUTER DESIGN, vol.17, no.1, avril 1978,
Concord (US) K. SOE HOJBERG: "One-step programmable arbiters for multiprocessors", pages 154 à 158
IBM TECHNICAL DISCLOSURE BULLETIN, vol.22,
no.3, août 1979, New York (US) A. BLUM: "Lookahead access request circuit for computer systems",
pages 1059 à 1060
IBM TECHNICAL DISCLOSURE BULLETIN, vol.23,
no.7A, décembre 1980, New York (US) D.F. BANTZ et
al.:"Asynchronous contention resolution", pages
3043 à 3044
Fall Joint Computer Conference, 1972, pages 719 à
732

(73) Titulaire : **THOMSON-CSF**
**173, Boulevard Haussmann**
**F-75379 Paris Cedex 08 (FR)**

(72) Inventeur : **Ballegeer, Jean-Claude**
**THOMSON-CSF SCPI 173, bld Haussmann**
**F-75360 Paris Cedex 08 (FR)**
Inventeur : **Nguyen, Duyet Huu**
**THOMSON-CSF SCPI 173, bld Haussmann**
**F-75360 Paris Cedex 08 (FR)**

(74) Mandataire : **Lepercque, Jean et al**
**THOMSON-CSF SCPI 173, bld Haussmann**
**F-75379 Paris Cedex 08 (FR)**

## Description

La présente invention concerne un procédé d'allocation d'une ressource dans un système comportant des unités de traitement de données autonomes, ainsi que le dispositif de mise en œuvre de ce procédé selon les préambules des revendications 1 et 8.

Dans le cadre de l'invention, le terme « unité de traitement de données » doit être entendu dans son acceptation la plus générale. Les systèmes comprenant de telles unités peuvent être, à titre d'exemples non limitatifs, des automates tels que des machines outils numériques comportant des unités exécutant des tâches spécifiques sous la commande d'un programme, des systèmes de régulation tels que les systèmes de régulation du trafic routier comportant des unités périphériques et des processeurs géographiquement éloignés ou encore, de façon plus classique, des systèmes informatiques. Dans tous ces systèmes se posent de nombreux problèmes d'interactions entre les diverses unités. Notamment, lorsque deux unités ou plus sont en compétition pour avoir accès à une même ressource, ce type de conflit doit être résolu de façon optimale. Pour fixer les idées, dans un système informatique comportant plusieurs processeurs une mémoire de masse peut constituer un exemple de ressource, cette ressource étant mise à la disposition de plusieurs processeurs autonomes.

Dans de nombreuses applications le besoin se fait donc sentir de mettre en œuvre un procédé d'allocation de ressources souple et performant.

Ce procédé doit satisfaire à de nombreux critères. Il doit, par exemple, permettre le travail en parallèle d'unités spécialisées ou accomoder entre elles des unités de technologie et/ou de familles différentes, en particulier ayant des cycles de travail différents les uns des autres. Une autre condition importante à satisfaire est l'adaptation harmonieuse de chaque unité à la charge globale de travail du système, tenant compte également de particularités locales. Ce procédé doit aussi permettre un changement de la configuration du système, par exemple son extensibilité, sans nécessiter de transformations importantes.

Enfin, il est également très important que la fiabilité du système soit maximale. Le fonctionnement défectueux d'une des unités ne doit pas influencer le fonctionnement des autres unités et notamment interdire l'accès à une ressource commune lorsque ces unités sont en compétition avec l'unité défectueuse. De façon plus générale, le fonctionnement du système doit être sûr et tous les blocages doivent être évités.

De nombreux procédés d'allocation de ressources sont connus. Ces procédés incorporent le plus souvent des procédures d'attribution d'un niveau de priorité aux unités en compétition.

Les premiers procédés connus permettaient une allocation des ressources en fonction de priorités réparties selon un schéma hiérarchique fixe ou encore selon une répartition temporelle cyclique, sous la commande de moyens entièrement centralisés.

Dans le cadre des systèmes informatiques précités, il est courant d'utiliser des moyens de liaison entre les unités du type bus. Ces bus constituent des exemples particulièrement intéressants de ressources mises à la disposition de plusieurs unités de traitement de données et pour lesquelles les conflits d'accès doivent être résolus par un dispositif d'allocation de la maîtrise du bus.

Pour ce type d'application des procédés d'allocation de ressources plus souples que ceux précédemment évoqués ont été proposés. Ces procédés mettent en jeu des procédures d'attribution dynamique de priorité ou encore des procédures d'échange d'une séquence de message du type « demande-validation et/ou acceptation », procédures plus connues sous la dénomination anglo-saxonne « hand-shake ». Des procédés de ce type sont décrits dans les demandes de brevet français publiées sous les N° FR-A-2 179 031 et FR-A-2 376 464. Bien qu'introduisant un plus grand degré de décentralisation dans la prise de décision d'allocation d'une ressource, il est encore nécessaire selon ces procédés de disposer d'un organe centralisé pour assurer un bon déroulement des procédures, que ce soit l'un des processeurs connectés au bus ou une unité spécialisée connue sous différentes dénominations telles que « moniteur de bus » ou « arbitre de bus ».

Il est également connu du brevet US-A-4 209 838 un système dans lequel il est fait usage d'un organe central de commande, appelé « Channel » qui détermine, sur réception d'un signal de requête, une fenêtre de temps pour la résolution des priorités.

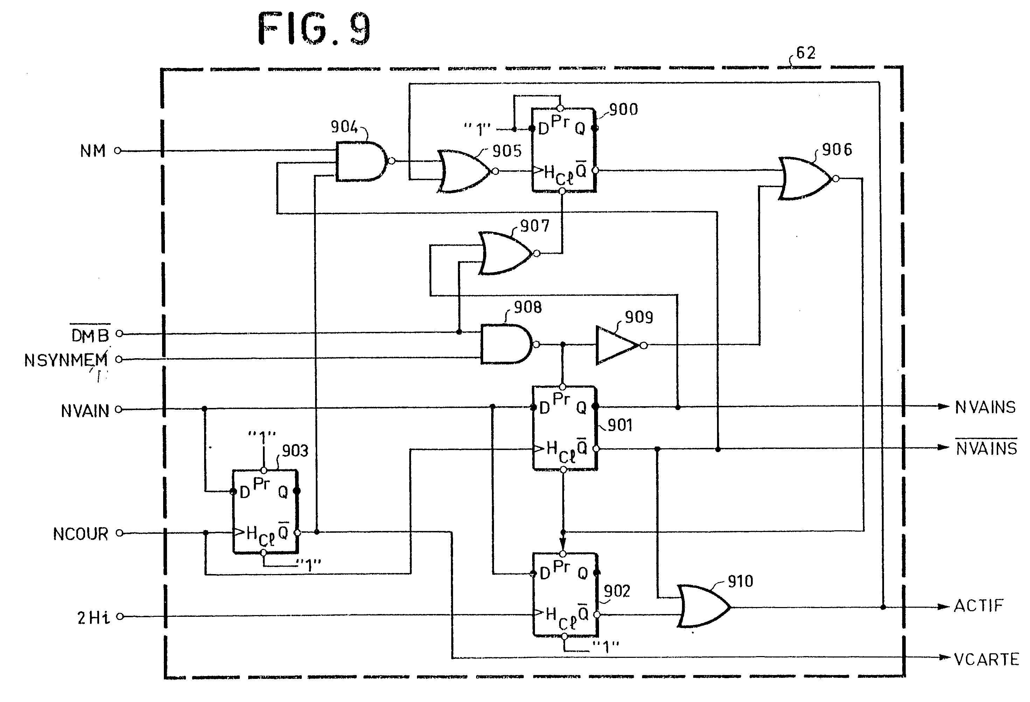

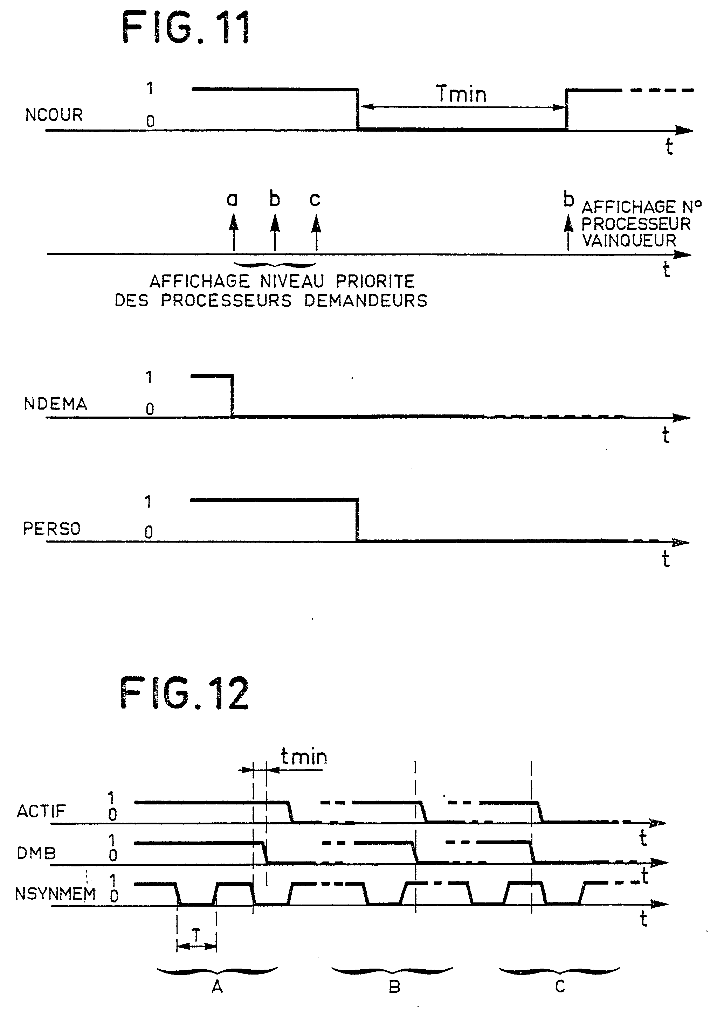

Il est enfin connu que la résolution des priorités puisse s'effectuer de façon décentralisée. L'article de synthèse de KENNETH et al : « A systematic approach to the design of digital bussing structures », paru dans « Fall Joint Computer Conference 1972 » ; pages 719-740, décrit parmi d'autres possibilités, une variante de la méthode du type connu sous la dénomination anglo-saxonne de « decentralized version of independent requests » (cf fig. 12), dérivée de la méthode « independent requests using a centralized bus control » selon la page 723 (fig. 9).

Selon la méthode décrite, il est utilisé un faisceau de lignes, (« BUS REQUESTS »), chaque ligne étant associée à un niveau de priorité. Lorsqu'une unité désire l'utilisation du bus de transmission commun aux unités, l'unité positionne un signal particulier sur la ligne qui correspond à son niveau de priorité.

Il est également utilisé un signal commun aux unités (« BUS ASSIGNED ») des unités est active. Lors de la retombée de ce signal, les unités demanderesses de l'allocation du bus scrutent tous les

2

conducteurs dudit faisceau pour déterminer la demande présentant la plus haute priorité.

L'invention se propose de répondre aux besoins qui ont été évoqués dans ce qui précède tout en obviant les inconvénients de l'art connu, notamment en décentralisant entièrement toutes les procédures de prise de décision d'allocation d'une ressource. En outre le procédé de l'invention permet de minimiser les pertes de temps au moment de l'attribution initiale d'une ressource ou du changement d'affectation de cette ressource.

L'invention a donc pour objet un procédé d'allocation d'une ressource dans un système comportant au moins deux unités de traitement de données autonomes, tels que spécifié dans la revendication 1.

Une demande Européenne parallèle, publiée le 20-10-1982 sous le N° 63071, concerne un procédé de transmission de données dans un système décentralisé.

L'invention a encore pour objet un dispositif de mise en œuvre de ce procédé tel que spécifié dans la revendication 8.

L'invention sera mieux comprise et d'autres avantages apparaîtront à l'aide de la description qui suit, en référence aux figures annexées :

la figure 1    représente schématiquement un dispositif d'allocation de ressources selon l'invention ;

la figure 2    représente plus en détail un des organes de la figure 1 ;

la figure 3    est une variante du dispositif de la figure 1 dans laquelle la ressource allouée est un canal d'échange de données du type bus ;

la figure 4    représente plus en détail le canal d'échange de données de la figure 3 ;

la figure 5    représente schématiquement des moyens d'interface utilisés dans le dispositif d'allocation de ressource selon l'invention ;

les figures 6 à 10    illustrent un exemple de réalisation pratique des moyens d'interface de la figure 5 ;

les figures 11 à 18    sont des diagrammes illustrant le fonctionnement du dispositif de l'invention.

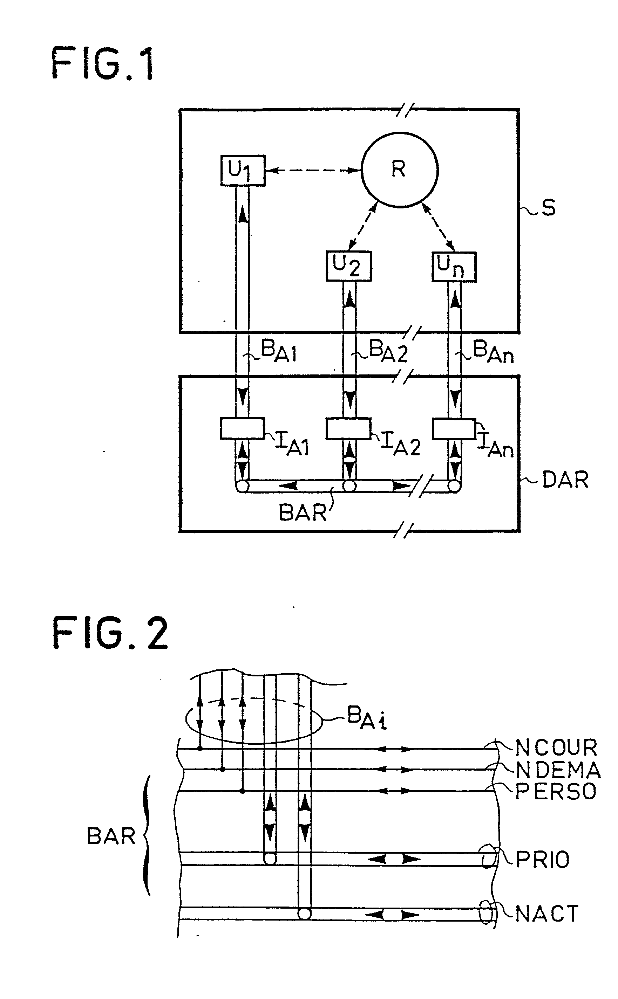

Le procédé de l'invention va être décrit dans sa généralité à l'aide des figures 1 et 2 et du diagramme de la figure 11.

Sur la figure 1, est représenté schématiquement un système S comportant plusieurs unités autonomes de traitement de données $U_1$ à $U_n$. Comme il a été rappelé précédemment, ces unités peuvent être de toutes natures. Pour fixer les idées, il sera décrit dans ce qui suit un système informatique S' comprenant au moins un processeur de données et des unités périphériques, sans que cela soit limitatif de la portée de l'invention.

Il est représenté également sur la figure 1 une ressource R qui peut être, par exemple, une mémoire de données, à laquelle une ou plusieurs unités $U_1$ à $U_n$ du système S désirent avoir accès.

Pour résoudre les conflits d'accès l'invention propose un dispositif d'allocation de ressources DAR comprenant des circuits d'interfaces $I_{A1}$ à $I_{An}$ et un canal de liaisons multiples BAR de couplage entre les moyens d'interface du type bus. Les unités $U_1$ à $U_n$ du système S sont couplées par un bus particulier $B_{A1}$ à $B_{An}$, chacune à un circuit d'interface qui lui est associé et qui sera appelé dans ce qui suit plus brièvement « interface ».

Selon l'une des caractéristiques les plus importantes de l'invention tous les circuits d'interfaces $I_{A1}$ à $I_{An}$ sont identiques, c'est-à-dire banalisés et le procédé d'allocation de ressources permet une décentralisation complète des décisions d'allocation.

Pour ce faire, il est utilisé un jeu de trois signaux fondamentaux :

— un signal indiquant qu'il y a eu au moins une unité demandant à utiliser une ressource particulière R du système S. Dans ce qui suit ce signal sera appelé « NDEMA » ;

— un signal signalant que cette ressource n'est sous le contrôle d'aucune unité, appelé « PERSO » ;

— et un signal « NCOUR » d'une durée déterminée lançant la procédure d'attribution de la ressource à une des unités dite gagnante et figeant toutes autres demandes pendant la durée déterminée.

De préférence, ces signaux sont de type binaire et peuvent donc prendre deux états : « 0 » ou « 1 » logiques.

D'autre part, il est affecté à chaque unité un numéro ou adresse et un niveau de priorité. Cette affectation peut s'effectuer par toutes procédures de l'art connu, de préférence de façon dynamique.

La procédure de prise de la maîtrise d'une ressource se décompose en deux sous-procédures :

— l'arbitrage entre plusieurs unités candidates à cette maîtrise ;

— le transfert d'une unité à une autre de cette maîtrise après une période d'activité de l'unité qui en avait la maîtrise.

Selon une variante préférée de l'invention, l'affectation des niveaux de priorités s'effectue selon un schéma comportant une affectation dynamique de ces niveaux. Cette affectation peut s'effectuer à l'aide de données enregistrées dans une mémoire et de façon préférentielle dans une mémoire non volatile de type « P.R.O.M. » (mémoire programmable à lecture seule). Le niveau de priorité sera calculé à l'aide de la différence entre les numéros attribués à l'unité en activité et à l'unité demanderesse de la maîtrise de la ressource à allouer, selon une variante préférée.

La ressource est attribuée à une unité dite gagnante à l'issue d'une « course » entre les unités en compétition au cours de laquelle cette unité gagnante aura affichée la plus forte priorité.

Une course est déclenchée dès que les trois conditions suivantes sont réunies :

— « NDEMA » actif (niveau bas ou « 0 » logique) signalant qu'au moins une unité $U_i$ demande le contrôle de la ressource R ;

— « PERSO » actif (niveau haut ou « 1 » logique) signalant que la ressource R n'est sous le contrôle d'aucune unité ;

— « NCOUR » inactif (niveau haut) signalant qu'il n'y a pas une course en train de se dérouler.

L'indice i est un nombre entier compris entre 1 et n, n représentant le nombre d'unités pouvant avoir accès à une ressource R du système S.

Le diagramme de la figure 11 illustre le cas où trois processeurs de données a, b et c désirent acquérir la maîtrise d'une même ressource R.

Le départ de la course est donné par la descente du signal « NCOUR » comme indiqué à la première ligne du diagramme de la figure 11, provoquée simultanément par les interfaces qui en ont, les premières, détectées les conditions de déclenchement. Pour chaque unité une nouvelle priorité a été calculée avant le front descendant « NCOUR ». Cette priorité n'est affichée que par les unités (a, b, c) ayant positionné une demande de la ressource. Après la durée de propagation des signaux nécessaire l'unité ayant présentée la plus forte priorité se voit attribuer la ressource. Cela a également pour effet de ramener le signal « PERSO » au niveau bas (« 0 » logique) et d'interdire aussi toute nouvelle course.

Dans le cadre d'un système informatique, chaque unité de traitement de donnée $U_n$ a un cycle de travail de base qui lui est propre. Lorsque les unités sont de technologies et/ou de familles différentes, ces temps de cycles sont différents les uns des autres. Ces temps sont définis par une horloge interne ou par des signaux d'horloge dérivés d'une horloge centralisée.

Après un temps $T_{min}$ déterminé par la plus lente des horloges des unités qui ont déclenché la course, le signal « NCOUR » est relevé et l'unité (b) gagnante affiche son numéro et signale le début de l'utilisation de la ressource par cette unité.

La figure 2 représente de façon plus détaillée le bus BAR reliant les circuits d'interfaces $I_{A1}$ à $I_{An}$. Il comprend trois fils de liaisons bidirectionnelles véhiculant les signaux « NCOUR, NDEMA et PERSO ». Par convention, la lettre « N » comme première lettre dans les sigles repérant les signaux utilisés par la présente invention signifie que ces signaux sont actifs à l'état bas ou « 0 » logique. Par ailleurs, ces signaux et leurs significations sont rappelés dans le TABLEAU I placé en fin de la présente description.

Le bus « BAR » comprend d'autre part un canal à liaisons bidirectionnelles multiples « PRIO » véhiculant un mot binaire affichant le niveau de la plus haute priorité calculée par les interfaces $I_{A1}$ à $I_{An}$. Dans un exemple de réalisation particulière ce canal peut comprendre huit fils de liaison, véhiculant chacun un bit, le mot de priorité étant composé d'un octet.

Le bus « BAR » comprend en outre un canal, également à liaisons bidirectionnelles multiples « NACT », comprenant par exemple quatre fils pour véhiculer un mot binaire de quatre bits représentant le numéro du processeur vainqueur (« b » dans l'exemple choisi) ou plus généralement de l'unité gagnante $U_i$.

Dans ce qui précède, il a été décrit le procédé de l'invention dans sa variante principale. Il est encore possible d'améliorer le procédé de l'invention par deux mesures particulières qui vont maintenant être détaillées : le lancement anticipé de la « course », c'est-à-dire essentiellement du signal « NCOUR » et l'activation anticipée de cette « course ».

En ce qui concerne le lancement anticipé de la course, partant d'un état du système où la ressource R n'est pas active, c'est-à-dire non allouée, la procédure de prise de contrôle de cette ressource décrite dans ce qui précède ne permet pas de connaître les moments exacts de début et de fin d'une course. Tout au plus, chaque unité candidate sait-elle à quel moment elle-même déclenchera la course. De plus, dès la fin d'une course il devient possible qu'une nouvelle unité soit immédiatement validée. De là, une unité active qui désire quitter la ressource ne devrait autoriser une course, en relevant le signal « PERSO », qu'une fois terminé son dernier cycle. Or, si elle se trouve être candidate et gagnante de la nouvelle course, elle aura ainsi attendu inutilement un cycle avant de reprendre la ressource quittée. De plus, si le fonctionnement au niveau de la ressource est tel que chaque unité est active pendant une durée déterminée constante, il y a alors perte de temps due à l'élection du prochain vainqueur. Ces temps d'inactivité sont inacceptables. Il est souhaitable de pouvoir lancer une course en parallèle avec le dernier cycle de l'unité active, et de telle sorte que cette course se termine en même temps que ce cycle. Pour cela, l'unité active lance seule la course si, au cours de son dernier cycle elle aura détecté la présence d'une demande d'allocation de la ressource R. Il lui suffit de tester « NDEMA » sans relever le signal « PERSO ». Si aucune demande n'est en vue avant le front montant de son horloge défini sur son temps de cycle, elle relève le signal « PERSO » sur la fin du cycle pour quitter la ressource R et le cas normal décrit précédemment se répète. En libérant ainsi la ressource R sans avoir déclenché de course la dernière unité active y laisse cependant son numéro actif qui continuera à servir au calcul d'une nouvelle distribution de priorités pour la prochaine course.

En ce qui concerne la seconde mesure, le lancement anticipé de « NCOUR » provient du souci de prendre en compte et de satisfaire le plus rapidement possible une demande de ressource, c'est-à-dire en pratique une demande de lancement de course, si la demande est présentée suffisamment tôt. Dans le même ordre d'idée, il est souhaitable que la validation d'une unité gagnante puisse aussi se faire au plus tôt. On risque en effet une perte de temps due à l'attente de la fin de la course pour la resynchronisation du vainqueur sur son horloge particulière.

On cherche donc, quand cela est possible, à valider l'unité gagnante sans attendre la fin de la course. Dans le cas où la dernière unité active est à nouveau demanderesse, elle peut, dès que sa course est terminée repasser en mode actif si elle est gagnante. Sachant qu'il n'existe qu'une seule unité gagnante à la fois, la validation anticipée ne nuit pas au bon fonctionnement du système.

Si l'unité gagnante est seule demanderesse dans le système S, elle ne mettra qu'un cycle d'horloge pour reprendre la ressource après une période d'inactivité.

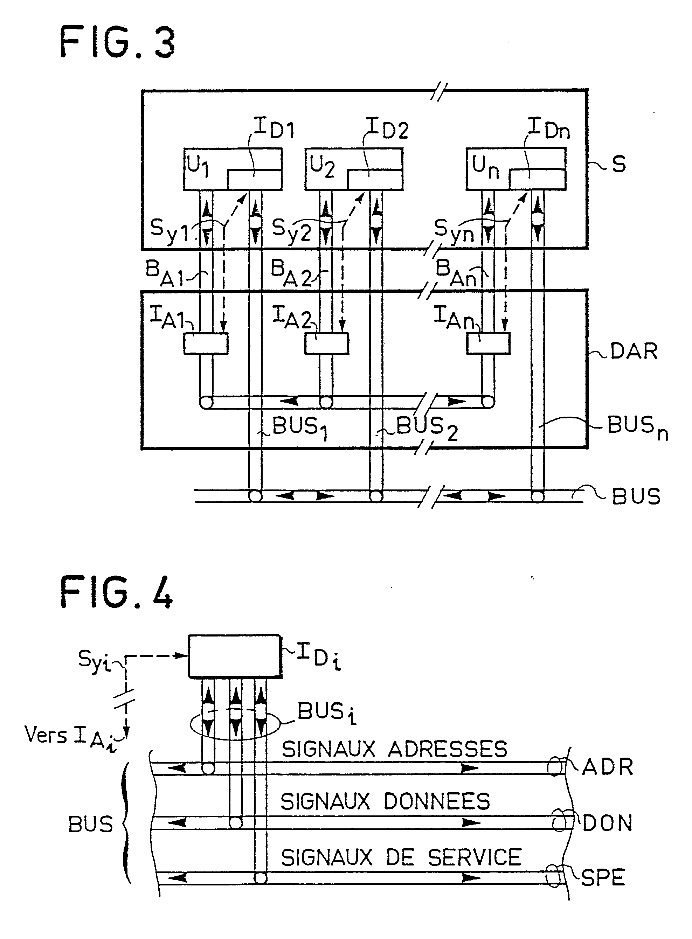

Comme il a été rappelé, le procédé permet l'arbitration entre des unités demanderesses d'une ressource et l'allocation de cette ressource à une des unités de traitement autonomes d'un système S, quelque soit la nature de ce système. Dans une approche préférée, ce système est un système informatique comprenant différentes unités : unités périphériques et/ou processeurs, toutes reliées à un canal d'échange de données du type bus. Dans cette approche, ce canal constitue un exemple particulièrement intéressant de ressource à allouer, pour laquelle les unités sont en compétition. Les figures 3 et 4 illustrent schématiquement un tel système.

Outre le dispositif d'allocation de ressource « DAR » précédemment décrit, le système S comporte un canal de liaison « BUS » pour l'échange de données, cet échange étant du type bidirectionnel dans l'exemple particulier décrit en relation avec la figure 3. De manière habituelle, ce canal peut comprendre comme illustrée sur la figure 4, un bus véhiculant des mots d'adresses « ADR », par exemple des mots de trente deux bits, un bus véhiculant des mots de données « DON », par exemple des mots également de trente deux bits divisibles en octets et un bus véhiculant des signaux de services « SPE ». Ces derniers comprennent généralement des signaux permettant des échanges sûrs tels que des signaux de validation et d'acquittement, ainsi qu'éventuellement des signaux d'horloges et de synchronisation. Ce bus peut également comprendre des liaisons de masse et des liaisons véhiculant les tensions nécessaires au fonctionnement des différentes unités qui lui sont connectées, selon la nature des technologies mises en œuvre. L'architecture précise du canal de liaison « BUS » sort du cadre de l'invention.

Les unités $U_1$ à $U_n$ composant le système peuvent communiquer avec le canal « BUS » à l'aide de bus particuliers « $BUS_1$ » à « $BUS_n$ » via des circuits d'interfaces $I_{D1}$ à $I_{Dn}$. Ces circuits ont pour rôle d'effectuer toutes les adaptations nécessaires permettant de connecter une unité particulière $U_i$ au canal « BUS », adaptations comme il est connu de nature technologique ou logicielle. Ces aspects sortent également du cadre de la présente invention. Il peut également être nécessaire de synchroniser l'un par rapport à l'autre les circuits d'interfaces pour l'allocation de ressources ($I_{Ai}$) et les circuits d'interfaces d'échange de données ($I_{Di}$). Cette synchronisation est symbolisée par les liaisons $S_{y1}$ à $S_{yn}$ qui peuvent être multiples et comprendre notamment des signaux d'horloge.

Une fois l'unité périphérique ou le processeur vainqueur déterminé par le procédé de l'invention qui vient d'être décrit, cette unité périphérique ou ce processeur prend la maîtrise du canal « BUS », et peut utiliser ce canal pour échanger des données avec une ou plusieurs autres unités, par exemple selon une procédure comme du type : adressage d'une unité particulière suivi de l'échange proprement dit.

Pour éviter une monopolisation du canal d'échange de données par une unité particulière, on peut allouer de façon centralisée ou de façon personnalisée un temps maximum au bout duquel la ressource, c'est-à-dire le canal « BUS » dans cette approche, doit être remise en compétition et attribuée à nouveau selon le procédé de l'invention. Pour ce faire, les horloges de chaque unité peuvent être utilisées en association avec une base de temps.

Les circuits d'interface ($I_{Am}$) pour l'allocation des ressources associés à chacune des unités en compétition ($U_n$) dans un système S vont maintenant être décrits plus en détail et un exemple de réalisation pratique va en être donné dans le cadre de l'approche qui vient d'être rappelée, c'est-à-dire lorsque la ressource à attribuer est un canal de liaison pour l'échange de données et le système S, un système informatique.

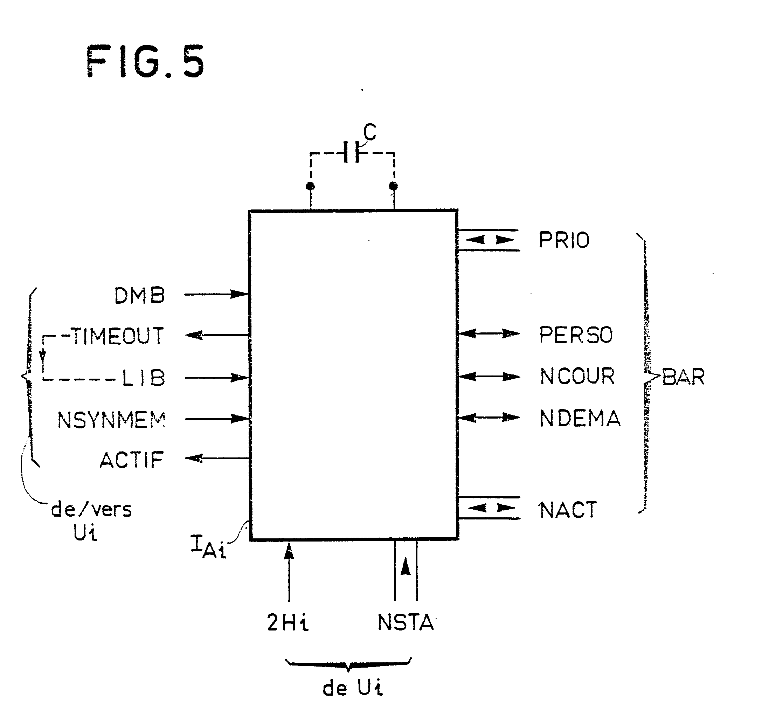

La figure 5 décrit schématiquement un tel circuit d'interface. Il est supposé tout d'abord que chaque unité est munie d'une horloge, d'une fréquence déterminée délivrant des signaux d'horloge $H_i$. Ces circuits se présentent sous la forme d'un module $I_{Ai}$ qui s'interconnecte entre le bus « BAR » et l'unité associée $U_i$. Il reçoit des signaux d'horloge « $2H_i$ » de fréquence double de celle de l'unité $U_i$, ces signaux d'horloge étant synchronisés l'un par rapport à l'autre. C'est cette horloge qui détermine le temps minimum de la course déclenchée par cet interface $IA_i$. La période doit être supérieure ou égale à un temps minimum pour assurer un bon fonctionnement de l'ensemble, ce temps dépendant de la technologie utilisée.

Cinq signaux sont nécessaires pour relier l'interface à l'unité associée.

L'interface $I_{Ai}$ est averti que l'unité $U_i$ est demanderesse du canal « BUS » d'échange de données par le signal « DMB ».

Lorsque l'unité $U_i$ est élue, l'interface $I_{Ai}$ renvoie le signal « ACTIF » indiquant que le canal « BUS » est disponible et que les transferts de données peuvent commencer. Un signal « NSYNMEM » permet de synchroniser l'interface $I_{Ai}$ avec l'interface d'échange de données $I_{Di}$ également associée à l'unité $U_i$, comme il a été décrit en relation avec les figures 3 et 4. Ce signal est l'un des signaux véhiculés par les liaisons de synchronisation ($Sy_i$) représentées sur cette même figure. Le signal « NSYNMEM » représenté sur la première ligne du diagramme de la figure 12, actif au niveau bas ou « 0 » logique selon la convention évoquée précédemment, est un signal périodique de durée « T » au niveau actif, durée égale au temps nécessaire à un transfert de donnée sur le canal « BUS ». Il n'interfère avec le fonctionnement de l'interface $I_{Ai}$ qu'au moment du dernier transfert de données effectuées.

Lorsque l'unité $U_i$ libère le canal « BUS », elle a la possibilité d'indiquer quand va s'effectuer le dernier transfert. Pour cela, il suffit qu'elle fasse retomber le signal « DMB » alors que le signal « NSYNMEM » est encore actif. Ceci est représenté sur le diagramme de la figure 12, partie A.

Si « DMB » retombe lorsque « NSYNMEM » est inactif, l'interface $I_{Ai}$ considère qu'il n'y aura plus de transferts. Ceci est représenté sur le diagramme de la figure 12, partie B.

Cette condition permet de réaliser le lancement anticipé de course qui a été évoqué précédemment et dont le déroulement détaillé sera décrit dans ce qui suit. Pour améliorer les performances, il est préférable d'utiliser cette fonction, auquel cas il faut s'assurer que le signal « DMB » est lié correctement au signal « NSYNMEM ».

Dans le cas général, la détermination du dernier transfert est sous la responsabilité de l'unité $U_i$ en activité et sort du cadre de l'invention.

La partie C du diagramme de la figure 12 représente le cas où un fonctionnement défectueux est apparu : le signal « ACTIF » est retombé avant le dernier transfert à réaliser.

Un signal « TIMEOUT » règle le temps maximum associé à l'unité $U_i$ pour la maîtrise du canal « BUS ». Ce temps est déterminé à l'aide d'un condensateur C par exemple, d'une valeur déterminée agissant sur un monostable comme il sera décrit ultérieurement. Toute autre méthode peut être mise en œuvre, par exemple une méthode purement numérique utilisant des compteurs binaires à capacité modifiable ou associés à une logique de sélection d'un état particulier.

Le signal « TIMEOUT » permet de répartir les accès au canal « BUS ». Il peut être défini deux modes d'utilisation fondamentaux :

— Le temps défini par le signal « TIMEOUT » a une valeur faible, par exemple de l'ordre de quelques microsecondes. Il permet alors à l'unité $U_i$ de réaliser un à deux transferts de données sur le canal « BUS » durant une activation de cette unité et de relâcher le canal « BUS » dès qu'il y a un autre demandeur. Dans ce cas chaque unité $U_i$ accède au canal « BUS » souvent, mais pour peu de temps.

— Le temps défini par le signal « TIMEOUT » est fixé de telle sorte qu'il soit de l'ordre de grandeur de la durée moyenne des accès au canal « BUS » par l'unité $U_i$. Dans ce cas, l'unité $U_i$ réalise en séquence une activité sur le canal « BUS ». Les temps morts sont également exploités.

En réponse au signal « TIMEOUT », l'unité renvoie un signal « LIB » libérant l'interface.

Enfin l'interface reçoit sur le canal « NSTA » un mot binaire représentant le numéro attribué à l'unité $U_i$.

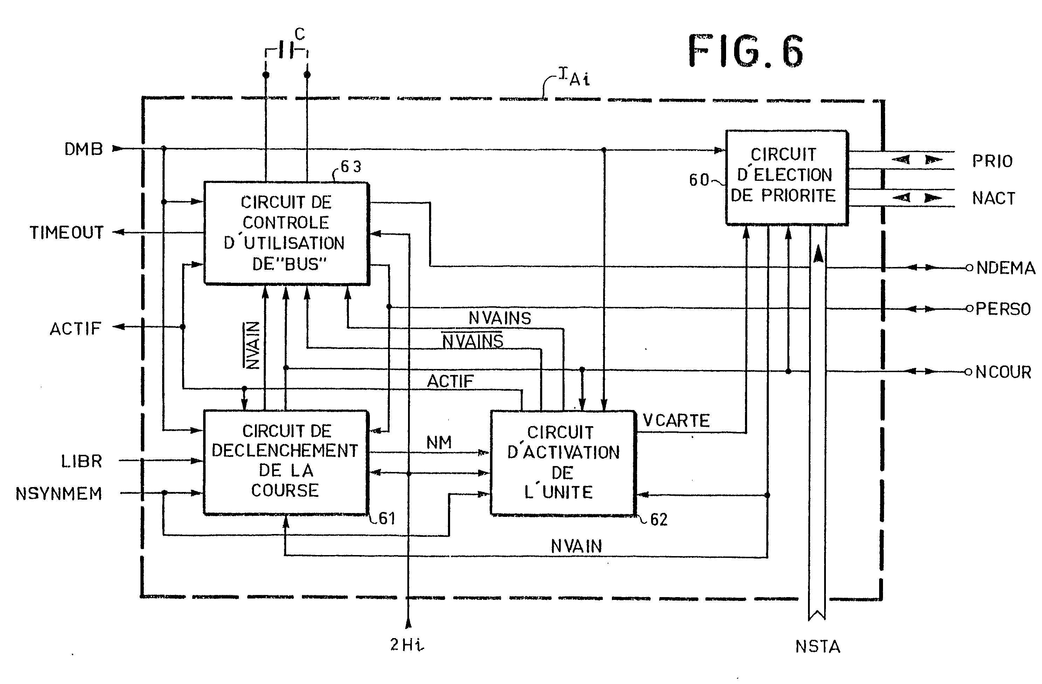

L'interface $I_{A1}$ peut être décomposé en quatre blocs distincts s'interconnectant pour réaliser la fonction d'allocation comme illustré par la figure 6.

On trouve successivement :

— un circuit d'élection de priorité 60. Ce circuit contient la logique déterminant la priorité. Il émet un signal indiquant que le circuit se considère comme ayant le code de plus forte priorité sur le canal « BUS » : « NVAIN »

— un circuit de déclenchement de la course 61. A partir d'informations externes : demande du canal « BUS », unité $U_i$ gagnante, « NVAIN », etc. ; la logique associée à ce circuit détermine si la course peut être déclenchée et pilotée par le circuit lui-même lorsqu'il y a anticipation. Il émet deux signaux principaux :

— « NCOUR » déjà décrit ;

et « NM » qui indique que c'est l'unité $U_i$ qui est maîtresse de la course.

— le circuit d'activation de l'unité 62 qui a pour rôle essentiel d'avertir l'unité $U_i$ que sa demande est satisfaite. L'activité cesse lorsque la demande disparait suivant les conditions qui viennent d'être précisées.

La logique associée à ce bloc renvoie vers le circuit d'élection de priorité le signal « VCARTE », permettant à l'unité $U_i$ d'afficher son numéro sur le bus « NACT » et indiquer le numéro vainqueur.

— le circuit de contrôle d'utilisation du canal « BUS » 63.

Cette partie de l'interface $I_{Ai}$ est un organe de décision des actions à effectuer sur le canal « BUS » et sur le bus « BAR ». Affichage de la demande pour participer à une éventuelle course, affichage de l'activité sur le canal « BUS » par le signal « PERSO » et contrôle du signal « TIMEOUT ».

Le fonctionnement détaillé de ces différents blocs va maintenant être décrit et des exemples concrets de réalisation pratiques vont en être donnés.

Pour fixer les idées, le choix de la technologie mise en œuvre peut se porter sur une technologie rapide de type « Schottky ».

Il sera utilisé dans ce qui suit des portes logiques réalisant les fonctions logiques ET, OU, NON-ET et NON-OU dans leurs acceptations habituelles et il n'y a pas lieu de les décrire plus avant. Il sera également utilisé des inverseurs qui ont pour but de fournir le complément logique d'un signal binaire présent sur leur entrée. Par convention, le niveau haut est le « 1 » logique, représenté dans le cadre de la technologie choisie par une tension + 5V, le niveau bas étant le « 0 » logique, représenté par une tension nulle.

Il est aussi utilisé des bascules de type D, dont il est utile d'en rappeler la configuration plus en détail. Celle-ci, ainsi que la table de vérité et le diagramme de temps d'une telle bascule peuvent être trouvés parmi d'autres publications, dans le livre français : « De la logique câblée aux microprocesseurs » par Bernard et autres, au tome 1, chapitre X.4, pages 136-138 (Editions Eyrolles ; Paris ; 1979).

Une telle bascule comporte une entrée de donnée D, une entrée d'horloge H, une entrée de prépositionnement Pr (« preset »), une entrée de remise à zéro Cl (« clear ») et deux sorties : vraie Q et inversée Q̄. Les entrées Pr et Cl sont asynchrones, et remettent la bascule à « 1 » ou « 0 » respectivement, indépendamment des signaux d'horloge. Le mode synchrone est défini par l'entrée de donnée D et l'entrée d'horloge H. La bascule recopie l'entrée D après l'apparition d'un front montant du signal d'horloge appliqué à l'entrée H, compte tenu d'un délai de prise en compte, de l'ordre de quelques nanosecondes pour la technologie choisie.

Il doit être noté que les circuits logiques dont les sorties sont connectées en parallèle sur les lignes constituant le bus « BAR » sont du type dit à « collecteur ouvert ». En effet, il faut que le niveau bas soit prépondérant par rapport au niveau haut.

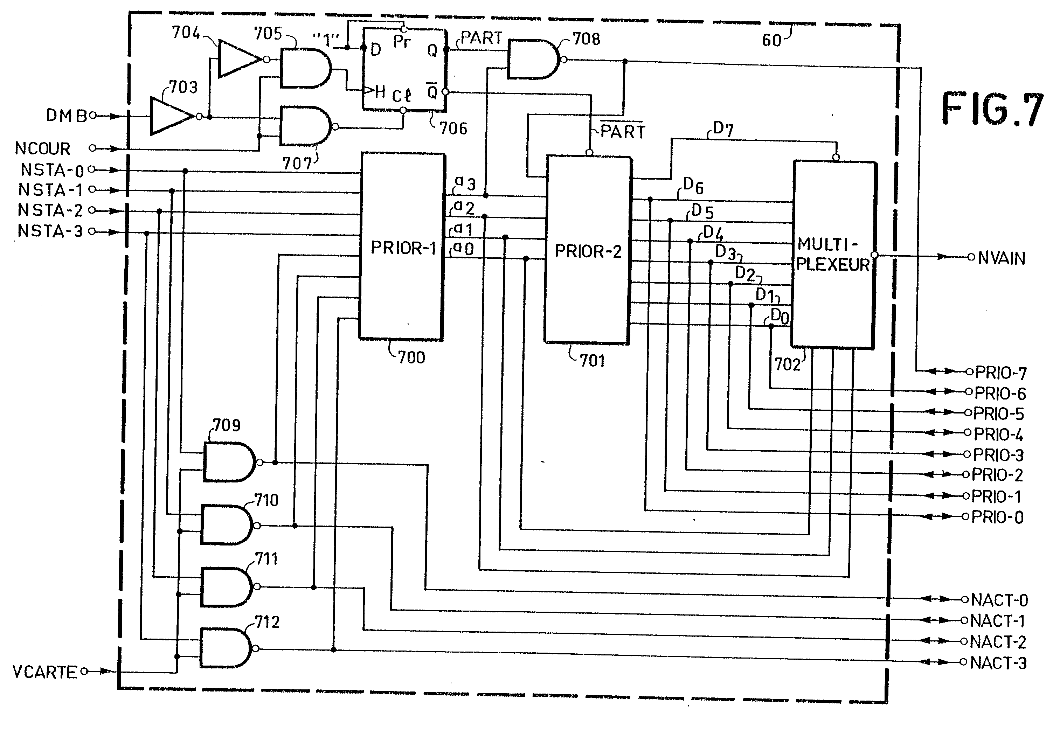

Enfin, seules les fonctions logiques essentielles à la compréhension de l'invention seront décrites et représentées sur les figures 7 à 10. De même, les circuits annexes tels que les circuits de distribution d'alimentation électrique ne seront pas représentés.

Les éléments logiques nécessaires à la réalisation des circuits peuvent être choisis parmi les circuits intégrés disponibles dans le commerce.

Comme le montre la figure 7 la fonction élection de priorité peut être représentée sous forme symbolique par un bloc recevant et émettant notamment le signal « NVAIN ». Ce signal est interne à l'interface $I_{Ai}$. Il indique que l'unité demanderesse se considère comme la plus prioritaire après analyse de sa priorité par les signaux véhiculés sur le bus « PRIO » (0 à 7).

Ces signaux sont reçus et réémis éventuellement après modification. Il en est de même pour les signaux représentant le numéro de l'unité active « NACT » (0 à 3). Pour élaborer ces signaux, le bloc 60 reçoit des signaux « NSTA » (0 à 3) représentant le numéro attribué à l'unité $U_i$ et les signaux « DMB » et « VCARTE » élaborés par l'unité $U_i$ ou les autres blocs de l'interface $I_{Ai}$ qui seront décrits dans ce qui suit.

Pour prétendre à la maîtrise du canal « BUS », une unité $U_i$ doit être participante à la course qui se termine par la détermination d'un vainqueur. La participation est représentée par le signal « PART », est activée lorsqu'une demande de l'unité $U_i$ est faite alors que la course n'a pas encore commencé : signal « NCOUR » au niveau haut. La participation de l'unité est activée durant toute la durée d'occupation du canal « BUS » : « DMB » au niveau haut.

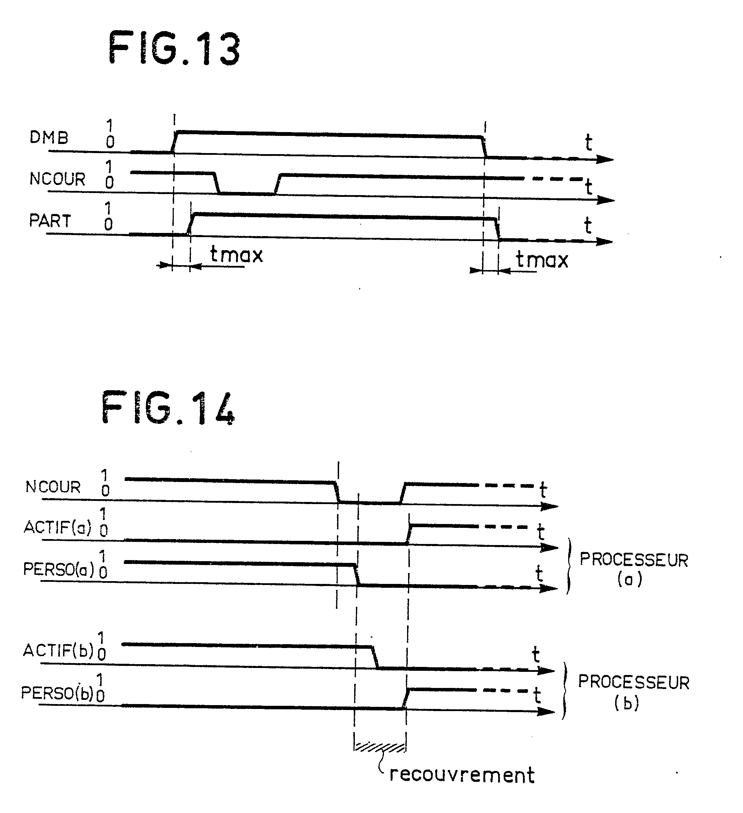

Ce fonctionnement est illustré par le diagramme de la figure 13.

Ensuite le calcul des priorités relatives est effectué par les circuits du bloc 60.

Ces circuits fonctionnent en permanence. Ils comprennent une mémoire PRIOR-1 : 700 du type PROM qui fixe la priorité suivant le numéro du processeur (numéro statique) donné par le bus « NSTA » (NSTA-0 à NSTA-3) et le numéro du dernier processeur présent sur le canal « BUS » (numéro actif) donné par le bus « NACT » (NACT-0 à NACT-3). La mémoire 700 fournit un code de quatre bits $(a_0-a_3)$ qui fixe la priorité relative de l'unité à un instant t. Cette priorité est une fonction de la différence entre « NACT » et « NSTA ». Les circuits d'entrée de la mémoire 700 correspondant aux bits du bus « NACT » comportent des inverseurs.

La longueur des mots binaires véhiculés par les bus « NACT » et « NSTA » est donnée au seul titre d'illustration non limitative de l'invention. Le numéro « NSTA » peut être fourni par une logique cablée. Il peut être en effet attribué de façon permanente à l'unité $U_i$. Avec quatre bits, seize unités peuvent être connectées au canal « BUS ».

Toujours à titre d'exemple, le contenu de la mémoire PRIOR-1 : 700 est donné par le TABLEAU II placé en fin de la présente description. Les signaux de sortie sont repérés par les symboles $a_0$ à $a_3$.

Le tableau met en évidence l'algorithme de priorité. Le contenu de la mémoire peut ne pas être standard et ainsi répondre à des applications particulières.

On peut obtenir un fonctionnement à priorité fixe, ou attribuer les priorités par groupe d'unités : unités périphériques et/ou processeurs.

Dans ce cas, pour chaque groupe d'unités les priorités de ces unités sont relatives à l'intérieur du groupe mais les groupes ont une priorité fixe.

Lors de l'initialisation du système, l'unité à laquelle le numéro « NSTA » = 0000 a été attribué prend fictivement le contrôle du canal « BUS » et transmet sur le canal « NACT » le numéro « 1111 ». Elle sera ensuite la moins prioritaire quand le signal « PERSO » est actif (niveau haut).

Le code de priorité, sorties de la mémoire 700 : $a_0$ à $a_3$ attribué à un instant t, sert à adresser une seconde mémoire PRIOR-2 : 701 également du type P.R.O.M., qui est sélectionnée lorsque l'unité est participante à la course (« PART » actif). Le niveau 0 correspond à la plus basse priorité. Le mécanisme est réalisé comme suit :

Chaque unité pouvant participer à la course impose un « 0 » sur les lignes 0 à 7 du bus « PRIO » pour inhiber toutes les priorités des autres unités de niveau inférieur, le niveau bas étant prépondérant. De ce fait, l'unité est gagnante si son niveau de priorité n'est pas oblitéré par une autre unité.

L'unité $U_i$ ayant la plus forte priorité active le signal « NVAIN » indiquant qu'elle est la plus prioritaire. « NVAIN » évolue dans le temps en fonction des demandes. Il se stabilise durant la course (intervalle T du signal « NCOUR » de la figure 12). Le signal « NVAIN » est produit par un multiplexeur 702 recevant sur ses entrées les sorties de la mémoire « PRIOR-2 » : 701 qui correspondent respectivement aux bits 0 à 6 du mot binaire véhiculés par les liaisons correspondantes du bus « PRIO » (ainsi qu'aux sorties respectives $D_7$ à $D_1$ de la mémoire 701). L'adressage de ce multiplexeur pour effectuer le choix entre les entrées s'effectue dans l'exemple considéré par un mot binaire de trois bits constitués par les sorties $a_0$ à $a_2$ de la mémoire « PRIOR-1 » : 700.

Le contenu de la mémoire « PRIOR-2» : 701 est donné à titre d'exemple dans le TABLEAU III placé en fin de la présente description. Les sorties $D_7$ à $D_1$ correspondant respectivement aux bits véhiculés par les liaisons « PRIOR-0 » à « PRIOR-6 ». La sortie $D_0$ active le multiplexeur 702 (entrée d'autorisation S). L'adressage de la mémoire « PRIOR-2 » : 701 est réalisé à l'aide d'un mot de cinq bits : $a_0$, $a_1$, $a_2$, $a_3$ et « PRIO-7 ». Ce signal « PRIO-7 » est élaboré à partir de la sortie $a_3$ de la mémoire « PRIOR-1 » : 700 inversée par l'inverseur 713 et des signaux « DMB » et « NCOUR » suivant la fonction logique réalisée par les inverseurs 703, 704, les portes logiques NON-ET 707 et 708, la porte logique ET 705 et la bascule de type D : 706 interconnectés comme indiqué sur la figure 7. Le signal sur la sortie « vraie » : Q est le signal « PART » déjà décrit.

Si l'unité est gagnante de la course, le bloc 60 reçoit le signal « VCARTE » qui lui permet d'afficher sur le bus « NACT » son numéro. Pour ce faire quatre portes logiques NON-ET (709 et 712) sont activées par le signal « VCARTE » de façon à transmettre les signaux présents sur les liaisons du bus « NSTA » représentant le numéro attribué à l'unité $U_i$.

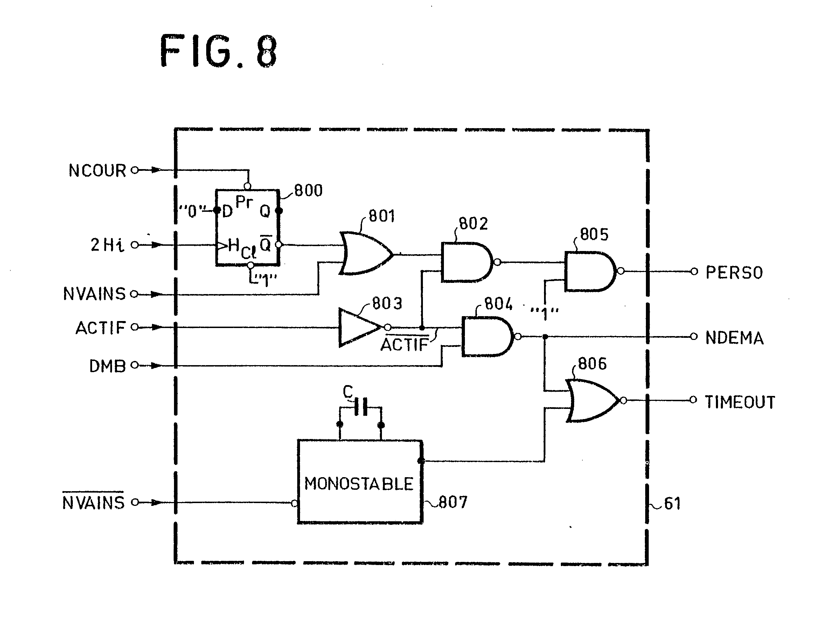

Sur la figure 8 est décrit un exemple de réalisation concret du bloc 61. Il a pour but d'élaborer les signaux « PERSO », « NDEMA » et « TIMEOUT » déjà décrits. Pour ce faire, il reçoit les autres blocs de l'interface $I_{Ai}$ ou de l'unité associée $U_i$ des signaux suivants : « NCOUR », « NVAINS » et son complément « NVAINS », « ACTIF », « DMB » ainsi que des signaux d'horloge « 2H$_i$ » de fréquence double de celle des signaux d'horloge de l'unité $U_i$, comme il a été précédemment rappelé.

Une course est déclenchée si une unité est demanderesse et il existe forcément un vainqueur. Le signal « PERSO » est donc invalidé dès le début d'une course, comme illustré par le diagramme de la figure 14.

L'activité de l'unité gagnante maintient « PERSO » à l'état bas dès la fin de la course. « PERSO » n'est donc plus sous la commande que du signal « ACTIF », lequel disparaît dès que l'unité retire sa demande. Lorsqu'une unité est déjà active et que la fonction d'anticipation de la course est utilisée, il y a recouvrement du signal « PERSO » par chaque unité, permettant ainsi un passage jointif d'une unité à l'autre.

Le passage de la maîtrise du canal « BUS » d'une unité à l'autre, par exemple d'un processeur b à un processeur a à l'issue d'une course est illustrée par le diagramme de la figure 14.

Pour obtenir le canal « BUS », l'unité $U_i$ doit activer la ligne « NDEMA » surtout dans le cas où le canal « BUS » est occupé. Cette ligne est activée tant que l'unité n'a pas été satisfaite.

L'unité active doit retirer sa demande sur le bus BAR pour que puisse être prise en compte les demandes des autres unités.

Dès que l'unité a obtenu le bus, le bloc 61 reçoit un signal « NVAINS » qui sera décrit ultérieurement et un monostable 807 est déclenché. La durée du signal de sortie est fixée par un condensateur C. Le temps « TIMEOUT » est signalé à l'unité $U_i$ seulement si une autre unité a fait une demande de bus (« NDEMA »).

Les signaux de sortie qui viennent d'être décrits sont élaborés à l'aide des portes logiques OU : 801 ; NON-ET : 802, 804, 805 ; NON-OU : 806, de l'inverseur 803 et la bascule de type D : 800 et du monostable 808 interconnectés comme indiqué sur la figure 8. Les repères « 0 » et « 1 » représentent des états logiques « zéro » et « un » permanents, c'est-à-dire d'après les conventions acceptées dans ce qui précède, respectivement des états bas et haut.

La figure 9 représente un exemple de réalisation concrète du bloc 62 de la figure 6. Ce bloc élabore quatre signaux : « NVAINS » et son complément « NVAINS », « ACTIF » et « VCARTE ».

L'activité de l'unité $U_i$ est signalée par le signal « ACTIF ». La course doit se terminer avec l'élection d'une unité et l'affichage du numéro de celle-ci sur le bus « NACT ».

La signification des deux autres signaux est la suivante :

« NVAINS » : Ce signal permet de mémoriser à la fin de la course (front arrière du signal « NCOUR »), l'état de l'unité (état vainqueur ou non). Lorsque l'unité relache le canal « BUS », « NVAINS » disparaît lorsque les conditions entre les signaux « DMB » et « NSYNNEM » décrites précédemment sont réalisées.

« VCARTE » : Ce signal est reçu par le bloc 60 de la figure 6, il autorise l'interface $I_{Ai}$ à afficher son numéro s'il est vainqueur. Ce signal n'est pas remis à l'état bas lorsque l'unité relache le canal « BUS » pour conserver active la fonction de calcul des priorités.

L'élaboration du signal « ACTIF » obéit aux critères qui vont être détaillés dans ce qui suit.

Dans le cas général, il ne peut y avoir de passage en mode actif qu'à la fin d'une course. Cependant une exception est faite, c'est l'activation anticipée. Cette procédure ne peut réellement avoir lieu que :

— si le numéro de l'unité $U_i$ est déjà présent sur le bus « NACT ». Dans le cas contraire, l'unité pourrait commencer des transferts sur le canal « BUS » avec un autre numéro. Ceci implique que l'activation anticipée ne peut intervenir que lorsque la dernière unité active est à nouveau réélue (priorité fixe). Le signal « VCARTE » qui indique l'état de l'unité depuis la dernière course doit être testé ;

— si l'unité a elle aussi lancé une course. Elle ne peut se déterminer active que si un temps minimum s'est écoulé depuis le début de la course qui correspond à la stabilisation du signal « NVAIN ». Si le temps minimum dépend de la technologie utilisée. Un ordre de grandeur dans le cas d'une technologie rapide est de 100 ns.

Si ces deux conditions sont réalisées, le signal « ACTIF » est validé à la fin de la course de l'unité si elle est déclarée gagnante de cette course.

**0 063 972**

Il existe donc deux modes de fonctionnement :
— un mode asynchrone qui a lieu lorsque l'unité $U_i$ n'avait pas la maîtrise du canal « BUS » auparavant ;
— un mode synchrone qui apparaît si l'unité $U_i$ avait cette maîtrise et si elle a lancé la course. Dans ce cas, l'unité est active au bout du temps minimum.

La bascule de type D : 901 est remise à zéro dès que la course est terminée : validation du signal « NVAINS ».

Plusieurs cas de fonctionnement vont maintenant être examinés :

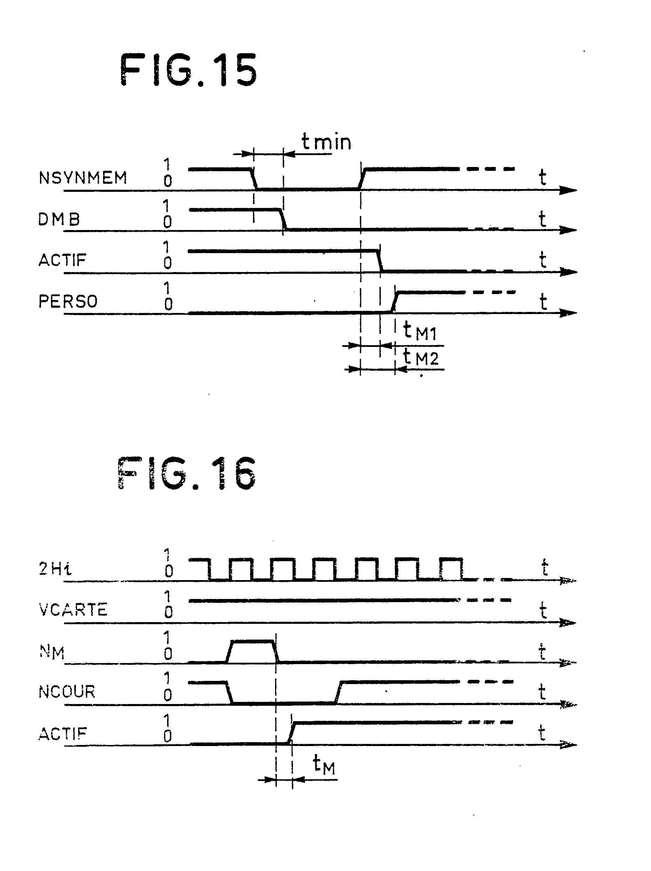

Le premier, illustré par le diagramme de la figure 15, est celui où l'unité relache le canal « BUS » avant le temps maximum qui lui est imparti. Le signal « DMB » retombe à l'état bas (signal « $\overline{\text{DMB}}$ » à l'état haut). Le signal « ACTIF » retombe à la fin du dernier transfert, c'est-à-dire sur le front montant du signal « NSYNMEN » et le signal « PERSO » remis à l'état haut par le bloc 61 déjà décrit, compte tenu des délais nécessaires à la prise en compte de ces états : $t_{min}$, $t_{M1}$, $t_{M2}$. Des valeurs typiques sont $t_{min} = 20$ ns, $t_{M1} = 25$ ns et $t_{M2} = 60$ ns dans le cadre de la technologie de l'exemple choisi.

Le second cas est celui de l'activation anticipée. Ce cas de fonctionnement est illustré par le diagramme de la figure 16.

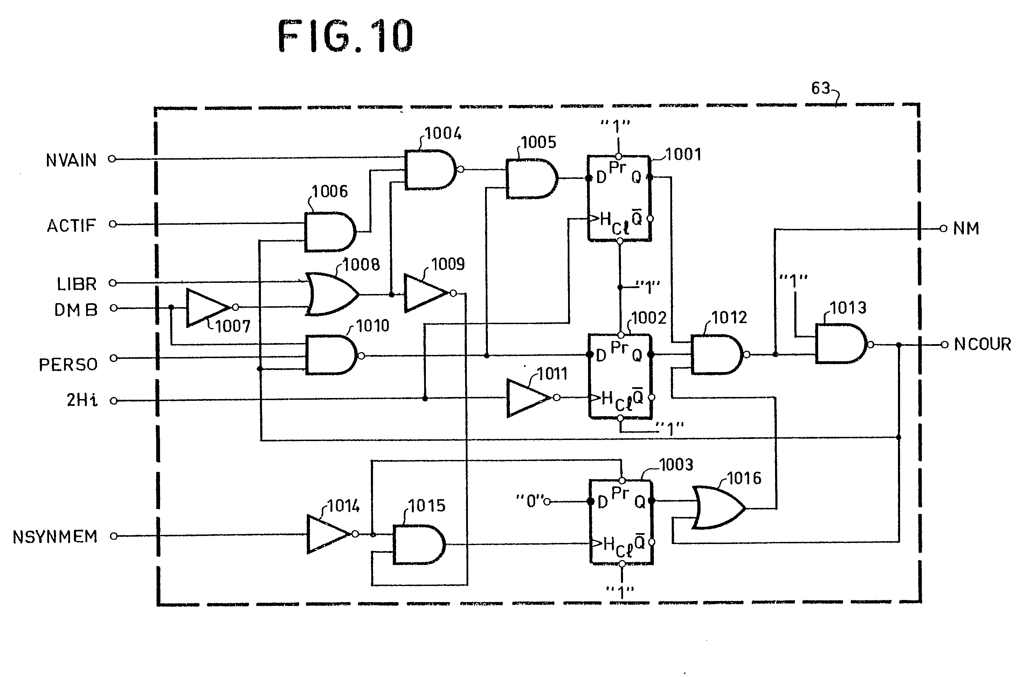

Le signal « VCARTE » à l'état haut indique que l'unité $U_i$ avait en dernier lieu la maîtrise du canal « BUS ». Le signal « NM » repasse à l'état haut dès que le signal « NCOUR » passe à l'état bas, indiquant ainsi que l'unité est maître de la course. Ce signal est élaboré par le bloc 63 qui sera décrit ultérieurement en liaison avec la figure 10. L'unité repasse à l'état actif (signal « ACTIF » à l'état haut), dès l'apparition du premier front montant des signaux d'horloges « $2H_i$ » compte tenu du délai $t_M$ de prise en compte de cette transition, qui peut être de l'ordre de 20 ns. L'unité repasse donc en activité avant la fin de la course (« NCOUR » à l'état haut).

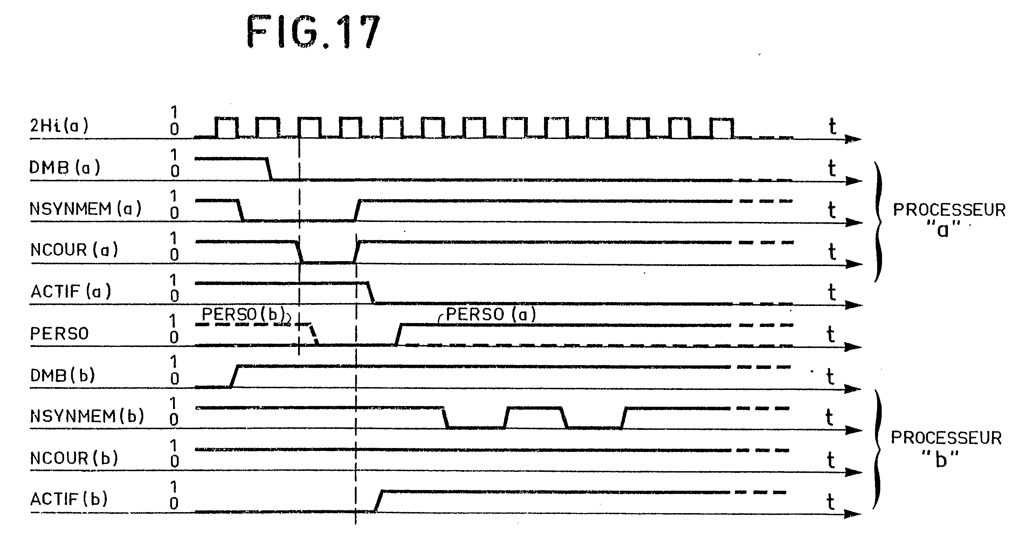

Le troisième cas est celui où l'unité prend la maîtrise du canal « BUS » alors qu'une autre unité avait cette maîtrise. Lorsque la fonction course anticipée est utilisée, le passage de la maîtrise d'une unité à l'autre s'effectue de façon jointive. Ce cas de fonctionnement est illustré par le diagramme de la figure 17. A titre d'exemple, la maîtrise du canal « BUS » passe, par exemple, d'un processeur référencé « a » à un processeur « b », à l'issue d'une course provoquée par la retombée du signal « NCOUR ». La chronologie des signaux ressort clairement du diagramme de la figure 17. Elle est conforme aux procédures qui ont été décrites antérieurement.

La génération des signaux « $\overline{\text{NVAINS}}$ », « NVAINS », « ACTIF » et « VCARTE » selon les séquences qui viennent d'être décrites s'effectue à partir des signaux « NM », « $\overline{\text{DMB}}$ », « NSYNMEN », « NVAIN », « NCOUR » et des signaux d'horloge « $2H_i$ » à l'aide des bascules du type D : 900 à 903, des portes logiques ET-NON : 904 et 908 ; NON-OU : 905, 906 et 907 ; de la porte OU : 910 et de l'inverseur : 909, interconnectés comme représenté sur la figure 9.

Le dernier bloc 63, dont un exemple de réalisation concrète est illustré par la figure 10, est destiné essentiellement à générer le signal de lancement de course « NCOUR » et accessoirement le signal « NM ». Pour ce faire, il reçoit les signaux « NDEMAN », « ACTIF », « LIBR », « DMB », « PERSO » et « NSYNMEN » ainsi que les signaux d'horloge « $2H_i$ ».

Une course est lancée à chaque fois qu'une ou plusieurs unités ($U_1$ à $U_n$) désirent accéder au canal « BUS » et en obtenir la maîtrise. La course permet de « geler » les demandes en vue d'élire l'unité la plus prioritaire.

Une course est lancée dans les cas suivants :
— Aucune unité n'occupe le canal « BUS ». Chaque unité déclenche sa propre course.
— Une unité $U_i$ est active sur le canal « BUS » et en a la maîtrise. Cette unité déclenche une course au cours de son dernier transfert (signal « NSYNMEN »).
— L'unité active $U_i$ a épuisé le temps qui lui est imparti (« TIMEOUT »).
— Une course est déclenchée si l'unité qui a la maîtrise du canal « BUS » retire sa demande (identique au cas précédent) ou si son interface reçoit l'ordre de libération (« LIBR »). Dans ce cas l'unité $U_i$ participe à la nouvelle course, si elle n'a pas retiré sa demande.

Les signaux « LIB » et « DMB » sont élaborés par l'unité $U_i$ associé à un interface donné $I_{Ai}$.

La synchronisation de la course s'effectue de la façon suivante :

Lorsqu'aucune unité n'a la maîtrise du canal « BUS » (signal « PERSO » à l'état haut), la course est synchronisée sur les signaux d'horloge « $2H_i$ » de l'unité. Elle dure une période d'horloge (« $2H_i$ »).

Dans l'autre cas, une unité est active, la course commence sur le premier front du signal d'horloge « $2H_i$ » après la retombée du signal « DMB ». Elle se termine sur la fin du dernier transfert si une période d'horloge s'est déjà écoulée. La durée minimum d'une course est donc égale à une période de l'horloge.

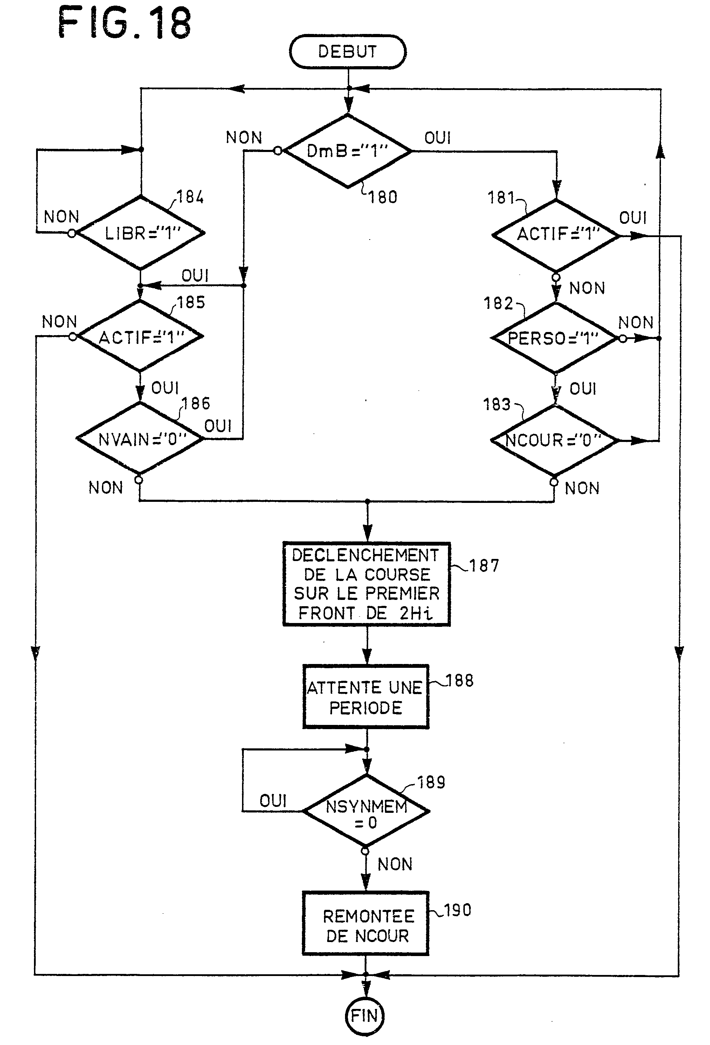

Le lancement d'une course (retombée du signal « NCOUR ») suit une séquence bien déterminée qui est illustrée par le diagramme de la figure 18.

Lorsqu'une demande de maîtrise du canal « BUS » se présente (en 180 : signal « DMB » = 1) et que l'unité n'est pas active (en 181 : signal « ACTIF » = 0), les conditions de déclenchement d'une course (en 187) sont les suivantes : aucune unité n'a la maîtrise du canal « BUS » (en 182 : signal « PERSO » = 1) et aucune autre course n'est lancée (en 183 signal « NCOUR » = 0). Dans ce cas après une période de signaux d'horloge « $2H_i$ » (en 1888), le signal « NCOUR » est remis à l'état haut pour assurer l'élection de l'unité gagnante. Dans ce cas le signal « NSYNMEN » est à l'état haut (inactif) puisqu'aucune unité n'a été activée.

Lorsque le signal de demande de maîtrise du canal « BUS » retombe (en 180) ou que l'interface $I_{Ai}$ reçoit un ordre de libération (en 184 : signal « LIB » = 1) et que l'unité est active (maîtrise du canal « BUS »), une course est déclenchée si le signal « NDEMA » est actif (en 186 : signal « NDEMA » = 1), c'est-à-dire qu'une unité demande la maîtrise du canal « BUS ». La remontée du signal de course « NCOUR » (en 190) s'effectue en synchronisme avec la fin du dernier transfert (en 189 : signal « NSYNMEN » : 0, branche « NON »).

Pour réaliser les conditions qui viennent d'être énoncées en relation avec l'organigramme de la figure 18, le signal « NCOUR » est élaboré à l'aide des signaux transmis au bloc 63 de la figure 10 et qui ont été rappelés à l'aide des bascules de type D : 1 001 à 1 003, des portes logiques ET-NON : 1 004, 1 010, 1 012 et 1 013 ; ET : 1 005, 1 006 et 1 015 ; OU : 1 008 et 1 016 ; et des inverseurs 1 007, 1 009, 1 014, 1 011 et 1 017, interconnectées comme indiqué sur la figure 10. Les références « 0 » et « 1 » indiquent deux états permanents respectivement bas et haut.

Si aucune autre unité n'a lancé de course, le signal « NCOUR » n'est que le complément de la copie du signal « NM ». Dans le cas contraire sa durée (à l'état bas) est supérieure à celle (état haut) du signal « NM ». La porte logique NON-ET 1 013 sert à découpler électriquement ces deux signaux, l'état bas du signal « NCOUR » sur la liaison correspondante du bus « BAR » étant imposé par l'interface produisant un signal « NCOUR » le plus lent.

Il est rappelé de nouveau que les portes logiques dont les sorties sont connectées aux liaisons du bus « BAR » doivent être du type à « collecteur ouvert » de manière à ce que l'état bas soit prépondérant sur l'état haut.

Les circuits qui viennent d'être décrits en relation avec les figures 7 à 10 ne l'ont été qu'à titre d'exemple de réalisation concrète non limitatif. Il va de soit, les conditions logiques reliant les différents signaux nécessaires au bon fonctionnement du dispositif d'allocation de ressources selon le mode d'exécution, peuvent être satisfaites par d'autre configuration de circuits logiques, ces circuits logiques pouvant en outre être d'une technologie différente de celle retenue dans le présent mode d'exécution.

Tableau I

ACTIF : signal indiquant que la ressource a été allouée à une unité $U_i$. Ce signal est synchronisé avec l'horloge $H_i$ de l'unité $U_i$ si le numéro NACT correspond à cette unité, le signal ACTIF est synchronisé avec la fin de course dans les autres cas ; il se dépositionne quand $U_i$ libère la ressource après la retombée de DMB, le signal ACTIF ne change pas de valeur quand une opération est en cours.

ADR : bus de liaison entre les interfaces d'échange de données $I_{Di}$ véhiculant des mots d'adresse.

$BA_i$ : bus local couplant une unité $U_i$ à son interface d'allocation de ressources $I_{Ai}$.

BAR : bus couplant les interfaces d'allocation de ressources $I_{Ai}$, comprenant les bus PRIO, NACT et les liaisons NCOUR, NDEMA et PERSO.

BUS : canal de liaison pour l'échange des données entre les unités $U_1$ à $U_n$, comprenant les bus ADR, DON et SPE.

$BUS_i$ : bus local couplant un interface d'échange de données $I_{Di}$ avec le canal BUS.

DAR : dispositif d'allocation de ressource.

DMB : signal de demande de ressource, par exemple de demande du canal BUS, actif à l'état haut et maintenu en permanence tant que la demande n'a pas été satisfaite.

DON : bus de liaison entre les interfaces d'échange de données $I_{Di}$ véhiculant des mots de données.

$H_i$ : signaux d'horloge d'une unité $U_i$ de fréquence $f_i$.

$2H_i$ : signaux d'horloge transmis à l'interface $I_{Ai}$ par l'unité $U_i$ et de fréquence $2f_i$.

$I_{Ai}$ : interface d'allocation de ressource associé à l'unité $U_i$.

$I_{Di}$ : interface d'échange de données associé à l'unité $U_i$.

LIBR : signal de libération de la ressource par l'interface $I_{Ai}$, généré par l'unité $U_i$, actif à l'état haut.

NCOUR : signal lançant une course ; actif à l'état bas ; bloque toute autre demande après sa remontée ; généré par un élément logique du type à « collecteur ouvert ».

NDEMA : signal de demande de ressource, par exemple du canal BUS ; actif à l'état bas ; positionné par toutes les unités.

NACT : bus de liaison multiple entre les interfaces d'allocations de ressource $I_{A1}$ à $I_{An}$ véhiculant le complément du numéro de l'unité $U_i$ gagnante de la course et généré par des éléments logiques du type « à collecteur ouvert ».

NSTA : numéro attribué à chaque unité $U_i$.

NSYNMEN : signal périodique généré par les interfaces d'échange de données $I_{D1}$ à $I_{Dn}$ ; actif à l'état bas et de durée égale à un transfert de donnée sur le canal BUS à l'initiative d'une unité $U_i$ ; utilisé pour synchroniser l'interface $I_{Ai}$ associé à l'unité $U_i$.

PERSO : signal indiquant qu'il n'y a aucune unité active ; actif à l'état bas et généré par un élément logique du type à « collecteur ouvert ».

PRIO : bus de liaison multiple entre les interfaces d'allocations de ressource $I_{A1}$ à $I_{An}$ véhiculant un

## 0 063 972

mot identifiant l'unité demandant la ressource la plus prioritaire et généré par des éléments logiques du type à « collecteur ouvert ».

R : ressource mise à la disposition des unités $U_1$ à $U_n$ en compétition, par exemple le canal BUS.

S : système comprenant les unités $U_1$ à $U_n$.

SPE : bus de liaison entre les interfaces d'échange de données $I_{D1}$ à $I_{Dn}$ véhiculant des signaux de service.

TIMEOUT : signal indiquant l'intervalle de temps maximum de temps alloué à une unité $U_i$ si d'autres unités sont demanderesses de la maîtrise de la ressource.

$U_i$ : unité du système S de rang i (1 à n), processeur ou unité périphérique pouvant rentrer en compétition avec au moins une autre des unités $U_1$ à $U_n$ pour l'accès à une ressource commune.

Tableau II

Contenu de PRIOR-1

| N° décimal | NACT | NSTA | | NSTA | | NSTA | | etc... |
|---|---|---|---|---|---|---|---|---|
| | 3210 | 3210 | a1.a0 | 3210 | a1.a0 | 3210 | a1.a0 | |
| 0 | 0000 | 0000 | 1111 | 0001 | 0000 | 0010 | 0001 | |
| 1 | 0001 | | 1110 | | 1111 | | 0000 | |
| 2 | 0010 | | 1101 | | 1110 | | 1111 | |
| 3 | 0011 | | 1100 | | 1101 | | 1110 | |
| 4 | 0100 | | 1011 | | 1100 | | 1101 | |
| 5 | 0101 | | 1010 | | 1011 | | 1100 | |
| 6 | 0110 | | 1001 | | 1010 | | 1011 | |
| 7 | 0111 | | 1000 | | 1001 | | 1010 | |
| 8 | 1000 | | 0111 | | 1000 | | 1001 | |
| 9 | 1001 | | 0110 | | 0111 | | 1000 | |
| 10 | 1010 | | 0101 | | 0110 | | 0111 | |
| 11 | 1011 | | 0100 | | 0101 | | 0110 | |
| 12 | 1100 | | 0011 | | 0100 | | 0101 | |
| 13 | 1101 | | 0010 | | 0011 | | 0100 | |
| 14 | 1110 | | 0001 | | 0010 | | 0011 | |
| 15 | 1111 | 0000 | 0000 | 0001 | 0001 | 0010 | 0010 | |

# 0 063 972

Tableau III

Contenu de PRIOR-2

| ENTREES ADRESSES | | | | | SORTIES | | | | | | | |
|---|---|---|---|---|---|---|---|---|---|---|---|---|
| | | | | | PRIO | | | | | | | |
| | | | | | 0 | 1 | 2 | 3 | 4 | 5 | 6 | - |
| "PRIO-7" | a3 | a2 | a1 | a0 | D7 | D6 | D5 | D4 | D3 | D2 | D1 | D0 |
| 0 | 1 | 0 | 0 | 0 | 0 | 0 | 0 | 0 | 0 | 0 | 0 | 0 |
| 0 | 1 | 0 | 0 | 1 | 0 | 0 | 0 | 0 | 0 | 0 | 1 | 0 |
| 0 | 1 | 0 | 1 | 0 | 0 | 0 | 0 | 0 | 0 | 1 | 1 | 0 |
| • | | • | | | | | | | • | | | |
| • | | • | | | | | | | • | | | |
| 0 | 1 | 1 | 1 | 1 | 1 | 1 | 1 | 1 | 1 | 1 | 1 | 0 |
| 0 | 0 | 0 | 0 | 0 | 1 | 1 | 1 | 1 | 1 | 1 | 1 | 1 |
| • | | • | | | 1 | 1 | 1 | 1 | 1 | 1 | 1 | • |
| • | | • | | | 1 | 1 | 1 | 1 | 1 | 1 | 1 | • |
| 0 | 0 | 1 | 1 | 1 | 1 | 1 | 1 | 1 | 1 | 1 | 1 | 1 |
| 1 | 1 | 0 | 0 | 0 | 1 | 1 | 1 | 1 | 1 | 1 | 1 | • |
| | | • | | | 1 | 1 | 1 | 1 | 1 | 1 | 1 | • |
| 1 | 1 | 1 | 1 | 1 | 1 | 1 | 1 | 1 | 1 | 1 | 1 | 1 |
| 1 | 0 | 0 | 0 | 0 | 0 | 0 | 0 | 0 | 0 | 0 | 0 | 0 |
| 1 | 0 | 0 | 0 | 1 | 0 | 0 | 0 | 0 | 0 | 0 | 1 | 0 |
| | | • | | | | | | | • | | | • |
| | | • | | | | | | | • | | | • |
| 1 | 0 | 1 | 1 | 1 | 1 | 1 | 1 | 1 | 1 | 1 | 1 | 0 |

## Revendications

1. Procédé d'allocation d'une ressource (R) dans un système (S) comportant au moins deux unités de traitement de données autonomes ($U_1$ à $U_n$), chaque unité pouvant être demanderesse de l'allocation de ressource (R) par l'intermédiare d'un circuit d'interface individuel ($I_{Ai}$), ces circuits d'interface étant couplés à un canal de liaisons multiples (BAR) véhiculant des signaux de type binaire pouvant prendre des premier (« 1 ») et second (« 0 ») états logiques ; chaque unité ($U_i$) étant en outre associée à un numéro particulier (NSTA) et à un niveau de priorité (PRIOR) ; procédé caractérisé en ce que, pour allouer la ressource (R) à une des unités ($U_i$) il est utilisé une séquence de trois signaux de commande conditionnels générés de façon autonome par lesdits circuits d'interface individuels ($I_{Ai}$) :
— un premier signal (NDEMA) dont le positionnement au second état logique (« 0 ») indique qu'au moins une unité ($U_i$) est demanderesse de l'allocation de la ressource (R), ce positionnement étant occasionné par tous les circuits d'interface associés à ces unités demanderesses ($U_i$) ;
— un deuxième signal (PERSO) dont le positionnement au premier état logique (« 1 ») indique que la ressource n'est allouée à aucune des unités ; ce signal étant positionné au second état (« 0 ») par l'interface ($I_{Ai}$) associé à l'unité ($U_i$) à laquelle la ressource est allouée ;
— et un troisième signal (NCOUR) dont la transition du premier état logique (« 1 ») au second état

12

**0 063 972**

logique (« 0 ») autorise simultanément le départ d'une compétition entre les unités demanderesses suivie de l'élection d'une seule de ces unités (U$_i$) pour l'allocation de la ressource (R) et l'interdiction de la prise en compte des demandes d'allocation ultérieures à la transition ; et dont la transition inverse après une durée prédéterminée (T$_{min}$) valide l'unité élue et occasionne l'affichage sur le canal de liaisons multiples d'un mot binaire représentant le numéro de l'unité élue (NACT) ainsi que de nouveau la prise en compte des demandes d'allocation de la ressource (R) ; la transition du premier état logique (« 1 ») au second état logique (« 0 ») étant occasionnée par au moins un circuit d'interface ayant détecté des conditions préétablies pour commander cette transition ; ces conditions comprenant :

— le positionnement au premier état logique (« 1 ») du deuxième signal de commande conditionnel (PERSO) indiquant que la ressource (R) n'est allouée à aucune unité ;

— le positionnement au second état logique (« 0 ») du premier signal de commande conditionnel (NDEMA) indiquant qu'au moins une unité est demanderesse de l'allocation de la ressource (R) ou épuisement de la durée de temps maximale (T$_{min}$) de la dernière unité à qui la ressource a été allouée ;

— et le positionnement au second état logique (« 0 ») du premier signal de commande conditionnel (NDEMA) indiquant qu'au moins une unité est demanderesse de l'allocation de la ressource (R) ;

la transition étant provoquée par les interfaces des unités demanderesses ;

et en ce que, concurremment à la génération du premier signal (NDEMA) par chacun des interfaces associés aux unités demanderesses de l'allocation de la ressource, ces interfaces génèrent et affichent sur le canal de liaisons multiples (BAR) un mot binaire représentant le niveau de priorité (PRIO) associé à l'unité, la ressource (R) étant allouée à l'unité (U$_i$) présentant la plus haute priorité instantanée.

2. Procédé selon la revendication 1, caractérisé en ce que pour l'affichage d'une priorité, les étapes suivantes sont réalisées :

— attribution d'un niveau de priorité à chacune des unités du système (U$_1$ à U$_n$) ;

— affichage sur le canal de liaisons multiples du niveau de priorité (PRIO) de la première unité demanderesse d'allocation de la ressource (R) ;

— calcul itératif d'un nouveau niveau de priorité (PRIO) par toutes les unités demanderesses de l'allocation de la ressource, par comparaison permanente de leur niveau de priorité avec le dernier niveau de priorité affiché sur le canal de liaisons multiples ;

— et affichage sur le canal de liaison multiple d'un nouveau niveau de priorité (PRIO) lorsque le résultat de la comparaison indique que le niveau de priorité de l'unité demanderesse est supérieur au niveau de priorité précédemment affiché.

3. Procédé selon la revendication 2, caractérisé en ce que l'attribution du niveau de priorité (PRIO) à une unité s'effectue de façon dynamique en calculant la différence entre le numéro attribué à l'unité demanderesse (NSTA) et le numéro de la dernière unité à qui la ressource a été attribuée (NACT).

4. Procédé selon l'une quelconque des revendications 1 à 3, caractérisé en ce que la ressource (R) est allouée à une unité (U$_i$) pour une durée de temps maximale (T$_{min}$) et en ce que après écoulement de cette durée de temps maximale la ressource (R) est remise à la disposition des unités demanderesses de l'allocation.

5. Procédé selon l'une quelconque des revendications 1 à 4, caractérisé en ce qu'en outre l'activité d'une unité à laquelle la ressource a été allouée, est rythmée par un signal de synchronisation (NSYNMEN) définissant des périodes successives de travail (T) et de repos et en ce que la transition du troisième signal de commande conditionnel (NCOUR) du premier état logique (« 1 ») au second (« 0 ») s'effectue sous la commande de l'interface (I$_{Ai}$) associée à l'unité en activité (U$_i$) de façon anticipée pendant la dernière période de travail concurremment à la détection du premier signal de commande conditionnel (NDEMA) positionné au second état logique (« 0 ») indiquant qu'au moins une unité est demanderesse de l'allocation de la ressource (R).

6. Procédé selon l'une quelconque des revendications 1 à 5, caractérisé en ce que lorsqu'une unité à qui la ressource avait été allouée est de nouveau demanderesse de l'allocation de la ressource (R) et présente le plus haut niveau de priorité (PRIO) après la prise en compte de sa nouvelle demande lors de la transition du troisième signal de commande conditionnel (NCOUR) du premier état logique (« 1 ») au second (« 0 »), l'élection est validée et l'unité revient à l'état actif de façon anticipée avant la transition inverse du troisième signal de commande conditionnel (NCOUR).

7. Procédé selon l'une quelconque des revendications 1 à 6, caractérisé en ce que la ressource à allouer (R) est un canal à liaisons multiples (BUS) pour l'échange de données numériques entre les unités (U$_1$ à U$_n$) et en ce que la durée de la période de travail (T) du signal de synchronisation (NSYNMEN) correspond au temps nécessaire pour effectuer un transfert de données entre deux unités couplées au canal (BUS).

8. Dispositif d'allocation d'une ressource à une des unités (U$_1$ à U$_n$) d'un système (S) selon le procédé de l'une quelconque des revendications 1 à 7 ; caractérisé en ce que les circuits d'interface (I$_{Ai}$) associés à chacune des unités (U$_i$) sont reliés à un canal de liaisons multiples (BAR) comportant des premier, deuxième et troisième conducteurs de liaisons bidirectionnelles simples véhiculant respectivement les premier (NDEMA), deuxième (PERSO) et troisième (NCOUR) signaux de commande conditionnels, un premier faisceau de conducteurs pour des liaisons bidirectionnelles multiples véhiculant le mot binaire représentant le plus haut niveau de priorité instantané (PRIO) calculé par les circuits d'interface et un second faisceau de conducteurs pour des liaisons bidirectionnelles multiples véhiculant le mot binaire

13

# 0 063 972

représentant le numéro de l'unité à laquelle la ressource a été allouée (NACT) et en ce que, en outre, les circuits d'interface sont couplés aux conducteurs par des éléments logiques émetteurs à jonctions semiconductrices du type à collecteur ouvert de façon à ce que le second niveau logique (« 0 ») soit prépondérant sur le premier niveau logique (« 1 »).

9. Dispositif selon la revendication 8 ; caractérisé en ce que les circuits d'interfaces ($I_{Ai}$) reçoivent de l'unité ($U_i$) qui leur est associée un mot binaire représentant son numéro (NSTA) et en ce que ce numéro est généré par des éléments à logique câblée.

10. Dispositif selon la revendication 8, caractérisé en ce que les circuits d'interface ($I_{Ai}$) transmettent à l'unité qui leur est associé ($U_i$) un signal de base de temps (TIMEOUT) indiquant que la durée de temps maximale (T) qui leur est allouée est écoulée et en ce que ce signal est élaboré par un circuit électronique comprenant un monostable (807) actionné par un signal (NVAINS) indiquant que l'unité a été élue et validée pour un début d'activité ; la durée de temps maximale (T) étant déterminée par la valeur de la capacité électrique d'un condensateur associé au monostable.

11. Dispositif selon la revendication 12 ; caractérisé en ce que le circuit d'élaboration du signal de base de temps (TIMEOUT) comprend également une porte logique (NON-OU : 806) conditionnant l'émission effective du signal de base de temps (TIMEOUT) au positionnement du premier signal de commande conditionnel (NDEMA) au second état logique (« 0 »).

12. Dispositif selon la revendication 9 ; caractérisé en ce que le circuit d'interface comprend un bloc de calcul du niveau de priorité (60) comportant une première mémoire non volatile (PRIOR-1 : 700) adressée par un mot binaire combinant le mot binaire (NSTA) représentant le numéro de l'unité associée et le mot binaire (NACT) représentant le numéro de la dernière unité à laquelle la ressource a été allouée et en ce que les signaux de sortie ($a_0$-$a_3$) de cette première mémoire représentent la priorité relative instantanée de l'unité associé ($U_i$).

13. Dispositif selon la revendication 12 ; caractérisé en ce que l'organe de calcul du niveau de priorité (60) comporte en outre des éléments logiques (703 à 707) recevant d'une part le troisième signal (NCOUR) et d'autre part un signal binaire émis par l'unité associée (DMB) indiquant que celle-ci est demanderesse de l'allocation de la ressource à son premier état logique (« 1 »), un élément logique mémorisant (706) élaborant en réponse à la transition du premier (« 1 ») au second (« 0 ») état logique du troisième signal de commande conditionnel (NCOUR) un signal binaire permanent (PART) indiquant la participation de l'unité à l'élection en cours ; et en ce que les signaux de sortie de la première mémoire (PRIOR-1 : 700) ainsi que le signal binaire de participation (PART) sont les signaux d'entrée d'un circuit d'élaboration du mot de priorité (707-701) comprenant une seconde mémoire non volatile (PRIOR-2 : 701) ; les sorties des circuits étant transmises sur les conducteurs respectifs des conducteurs du faisceau véhiculant le mot binaire représentant le plus haut niveau de priorité instantané PRIO-0 à PRIO-7) et le bloc de calcul de priorité (60) comprenant en outre un élément logique (MULTIPLEXEUR : 702) élaborant un signal binaire (NVAIN) dont le second état logique (« 0 ») indique que l'unité associée ($U_i$) présent le plus haut niveau instantané de priorité.

14. Dispositif selon la revendication 12, caractérisé en ce qu'en outre le bloc de calcul du niveau de priorité (60) comporte des éléments logiques (709 à 712) permettant de transmettre un mot binaire représentant le numéro de l'unité associée sur les conducteurs correspondant du faisceau véhiculant le mot représentant le numéro de l'unité à laquelle la ressource (R) a été allouée en réponse à un signal d'autorisation (VCARTE) et en ce que ce signal d'autorisation est élaboré à l'aide d'un élément logique (903) mémorisant le signal (NVAIN) indiquant que l'unité associée ($U_i$) a le niveau de priorité instantanée le plus élevé au moment de la transition du premier état logique (« 1 ») au second (« 0 ») du troisième signal de commande conditionnel (NCOUR).

15. Dispositif selon la revendication 8, caractérisé en ce que chaque unité ($U_1$ à $U_n$) comprend en outre un générateur de signaux impulsionnels d'horloge d'une fréquence déterminée, ces unités transmettent aux circuits d'interface ($I_{Ai}$ à $I_{An}$) qui leur sont associés des signaux impulsionnels d'horloge à fréquence double ($2H_i$) et en ce que le circuit d'interface ($I_{Ai}$) comprend des éléments logiques générant un signal binaire permanent (ACTIF) transmis à l'unité associée pour indiquer un état d'activité de l'interface après son élection : les éléments logiques comprennent un élément mémorisant (902) synchronisant le signal généré sur la première transition du signal impulsionnel à fréquence double ($2H_i$) survenant après la transition du troisième signal de commande conditionnel (« NCOUR ») du premier (« 1 ») au second (« 0 ») état logique.

16. Dispositif selon la revendication 15, caractérisé en ce que les éléments comprennent un élément mémorisant (902) synchronisant le signal généré sur la première transition du signal impulsionnel à fréquence double ($2H_i$) survenant après la transition du troisième signal de commande conditionnel (« NCOUR ») du premier (« 1 ») au second (« 0 ») état logique.

17. Dispositif selon l'une quelconque des revendications 14 à 16, caractérisé en ce que les éléments logiques mémorisant sont des bascules bistables de type D.

## Claims

1. Method of allocation of a source (R) in a system (S) comprising at least two autonomous data

14

processing units ($U_1$ to $U_n$), each unit being susceptible to demand the allocation of the source (R) through an individual interface circuit ($I_{Ai}$), these interface circuits being coupled to a multiple connection channel (BAR) transferring signals of binary type and susceptible to take first (« 1 ») and second (« 0 ») logic states ; each unit ($U_i$) being further associated with a particular number (NSTA) and with a priority level (PRIOR) ; this method being characterized in that, for allocation of the source (R) to one of the units ($U_i$), a sequence of three conditional control signals is used which are generated in autonomous manner by the individual interface circuits ($I_{Ai}$) :

— a first signal (NDEMA) the setting into the second logic state (« 0 ») of which indicates that at least one unit ($U_i$) demands the allocation of the source (R), this setting being caused by all of the interface circuits associated with these demanding units ($U_i$) ;

— a second signal (PERSO) the setting into the first logic state (« 1 ») of which indicates that the source is not allocated to any of the units ; this signal being set into the second state (« 0 ») by the interface ($I_{Ai}$) associated with the unit ($U_i$) to which the source is allocated ;

— and a third signal (NCOUR) the transition from the first logic state (« 1 ») into the second logic state (« 0 ») of which simultaneously authorizes the beginning of a competition between the demanding units followed by the election of only one of these units ($U_i$) for allocation of the source (R) and the inhibition to take into account the allocation demands occurring after the transition ; and the opposite transition of which, after a predetermined duration ($T_{min}$), enables the elected unit and causes the display of a binary word representing the number of the elected unit (NACT) on the connection channel, as well a retaking into account of the allocation demands of the source (R) ; the transition from the first logic state (« 1 ») to the second logic state (« 0 ») being caused by a least one interface circuit having detected preestablished conditions for controlling this transition ; these conditions comprising :

— the setting of the second conditional control signal (PERSO) indicating that the soruce (R) is not allocated to any unit into the first logic state (« 1 » ;

— the setting into the second logic state (« 0 ») of the first conditional control signal (NDEMA) indicating that at least one unit demands the allocation of the source (R) or the expiry of the maximum time duration ($T_{min}$) of the last unit whereto the source has been allocated ;

— and the setting to the second logic state (« 0 ») of the first conditional control signal (NDEMA) indicating that at least one unit demands the allocation of the source (R) ;

the transition being caused by the interfaces of the demanding units ;

and in that, concurrently with the generation of the first signal (NDEMA) by each of the interfaces associated with the units demanding the allocation of the source, these interfaces generate and display on the multiple connection channel (BAR) a binary word representing the priority level (PRIO) associated with the unit, the source (R) being allocated to the unit ($U_i$) presenting the highest momentary priority.

2. Method according to claim 1, characterized in that, for the display of a priority, the following steps are performed :

— attribution of a priority level to each of the units of the system ($U_1$ to $U_n$) ;

— display of the priority level (PRIO) of the first unit demanding the allocation of the source (R) on the multiple connection channel ;

— iterative computation of a new priority level (PRIO) by all of the units demanding the allocation of the source, by permanent comparison of their priority levels to the last priority level displayed on the multiple connection channel ;

— and display of a new priority level (PRIO) on the multiple connection channel when the comparison result indicates that the priroity level of the demanding unit exceeds the previously displayed priority level.

3. Method according to claim 2, characterized in that the attribution of the new priority level (PRIO) to a unit is performed in dynamic manner by computing the difference between the number attributed to the demanding unit (NSTA) to the number of the last unit whereto the source has been allocated (NACT).

4. Method according to any of claims 1 to 3, characterized in that the source (R) is allocated to a unit ($U_i$) for a maximum time duration ($T_{min}$) and in that, after this maximum time duration, the source (R) is again made available to the units demanding the allocation.

5. Method according to any of claims 1 to 4, characterized in that the activity of one unit whereto the source has been allocated is further clocked by a synchronization signal (NSYNMEN) defining the successive operative periods (T) and inoperative periods, and in that the transition of the third conditional control signal (NCOUR) from the first logic state (« 1 ») to the second (« 0 ») is performed under control of the interface ($I_{Ai}$) associated with the active unit ($U_i$) in anticipated manner during the last operative period concurrent with the detection of the first conditional control signal (NDEMA) set into the second logic state (« 0 ») indicating that at least one unit demands the allocation of the source (R).

6. Method according to any of claims 1 to 5, characterized in that, when a unit whereto the source had been allocated demands a further allocation of the source (R) and has the highest priority level (PRIO) after its further demand has been taken into account upon the transition of the third conditional control signal (NCOUR) from the first logic state (« 1 ») to the second (« 0 »), the election is enabled and the unit returns to the active state in anticipated manner prior to the opposite transition of the third conditional control signal (NCOUR).

7. Method according to any of claims 1 to 6, characterized in that the source (R) to be allocated is a multiple connection channel (BUS) for the exchange of digital date between the units ($U_1$ to $U_n$), and in that the duration of the operative period (T) of the synchronization signal (NSYNMEN) corresponds to the time required for performing a data transfer between two units coupled to the channel (BUS).

8. Device for the allocation of a source to one of the units ($U_1$ to $U_n$) of a system (S) in accordance with the method of any of claims 1 to 7 ; characterized in that the interface circuits ($I_{Ai}$) associated with each of the units ($U_i$) are connected to a multiple connection channel (BAR) comprising first, second and third single bidirectional connection conductors respectively propagating the first (NDEMA), the second (PERSO) and the third (NCOUR) conditional control signals, a first bundle of conductors for the bidirectional multiple connections carrying the binary word representing the highest momentary priority level (PRIO) computed by the interface circuits and a second conductor bundle for the multiple bidirectional connections transferring the binary word representing the number of the unit whereto the source has been allocated (NACT), and in that the interface circuits are further coupled to the conductors through logic transmitter elements having semiconductor junctions of open collector type, in such a manner that the second logic state (« 0 ») prevails over the first logic level (« 1 »).

9. Device according to claim 8, characterized in that the interface circuits ($I_{Ai}$) receive from the unit ($U_i$) associated therewith a binary word representing its number (NSTA), and in that this number is generated by wired logic elements.

10. Device according to claim 8, characterized in that the interface circuits ($I_{Ai}$) transmit to the unit associated therewith ($U_i$) a time base signal (TIMEOUT) indicating that the maximum time duration (T) allocated thereto has expired, and in that this signal is generated by an electronic circuit comprising a monostable (807) activated by a signal (NVAINS) indicating that the unit has been elected and enabled for the beginning of activity ; the maximum time duration (T) being determined by the value of the electric capacity of a capacitor associated with the monostable.

11. Device according to claim 12, characterized in that the circuit for generating the time base signal (TIMEOUT) further comprises a logic gate (NOR, 806) conditioning the effective transmission of the time base signal (TIMEOUT) by the setting of the first conditional control signal (NDEMA) to the second logic state (« 0 »).

12. Device according to claim 9, characterized in that the interface circuit comprises a priority level computation block (60) comprising a first non-volatile memory (PRIOR-1, 700) addressed by a binary word combining the binary word (NSTA) representing the number of the associated unit with the binary word (NACT) representing the number of the last unit whereto the source has been allocated, and in that the output signals ($a_0$-$a_3$) of this first memory represent the relative momentary priority of the associated unit ($U_i$).

13. Device according to claim 12, characterized in that the priority level computation device (60) further comprises logic members (703 to 707) receiving, on the one hand, the third signal (NCOUR) and, on the other hand, a binary signal transmitted by the associated unit (DMB) and indicating that the latter demands the allocation of the source when it is in its first logic state (« 1 »), a logic memory member (706) generating, in response to the transition of the third conditional control signal (NCOUR) form the first (« 1 ») to the second (« 0 ») logic state, a permanent binary signal (PART) indicating the participation of the unit in the current election ; and in that the output signals of the first memory (PRIOR-1, 700) as well as the binary participation signal (PART) are the input signals of a circuit for the generation of the priority word (707-701) comprising a second non-volatile memory (PRIOR-2, 701) ; the outputs of these circuits being transmitted to the respective conductors of the conductors of the bundle transferring the binary word representing the highest momentary priority level (PRIO-0 to PRIO-7), and the priority computation block (60) further comprising a logic member (multiplexer : 702) generating a binary signal (NVAIN) the second logic state (« 0 ») of which indicates that the associated unit ($U_i$) presents the highest momentary priority level.

14. Device according to claim 12, and further characterized in that the priority computation block (60) comprises logic members (709 to 712) permitting the transmission of a binary word representing the number of the associated unit to the conductors corresponding to the bundle transferring the word representing the number of the unit whereto the source (R) has been allocated in response to an authorization signal (VCARTE) and in that this authorization signal is generated by means of a logic member (903) storing the signal (NVAIN) indicating that the associated unit ($U_i$) has the highest momentary priority level at the moment of the transition of the third conditional control signal (NCOUR) from the first logic state (« 1 ») to the second (« 0 ») logic state.

15. Device according to claim 8, characterized in that each unit ($U_1$ to $U_n$) further comprises a pulse signal clock generator of determined frequency, these units transmitting to the interface circuits ($I_{Ai}$ to $I_{An}$) associated therewith clock pulse signals of double frequency ($2H_i$), and in that the interface circuit ($I_{Ai}$) comprises logic members generating a permanent binary signal (ACTIF) transmitted to the associated unit to indicate an activity state of the interface after its election, the logic members comprising a memory member (902) synchronizing the signal generated upon the first transition of the double frequency ($2H_i$) pulse signal occurring after the transition of the third conditional control signal (« NCOUR ») from the first (« 1 ») to the second (« 0 ») logic state.

16. Device according to claim 15, characterized in that the elements comprise a memory element (902) synchronizing the signal generated upon the first transition of the double frequency ($2H_i$) pulse

16

# 0 063 972

signal occurring after the transition of the third conditional control signal (« NCOUR ») from the first (« 1 ») to the second (« 0 ») logic state.

17. Device according to any of claims 14 to 16, characterized in that the logic memory members are bistable D-type circuits.

## Patentansprüche

1. Verfahren zur Zuweisung einer Quelle (R) in einem System (S), das wenigstens zwei autonome Datenverarbeitungseiheiten ($U_1$ bis $U_n$) enthält, wobei jede Einheit die Zuweisung der Quelle (R) über eine individuelle Schnittstellenschaltung ($I_{Ai}$) anfordern kann und diese Schnittstellenschaltungen an einen Mehrfachverbindungskanal (BAR) angekoppelt sind, über den die Binärsignale geführt werden, welche einen ersten Logikzustand (« 1 ») und einen zweiten Logikzustand (« 0 ») annehmen können ; wobei jede Einheit ($U_i$) ferner einer besonderen Nummer (NSTA) und einem Prioritätsniveau (PRIOR) zugeordnet ist ; wobei das Verfahren dadurch gekennzeichnet ist, daß zur Zuweisung der Quelle (R) zu einer der Einheiten ($U_i$) eine Sequenz von drei bedingten Steuersignalen verwendet wird, die von den individuelle Schnittstellenschaltungen ($I_{Ai}$) autonom erzeugt werden :

— ein erstes Signal (NDEMA), dessen Einstellung auf den zweiten Logikzustand (« 0 ») anzeigt, daß wenigstens eine Einheit ($U_i$) die Zuweisung einer Quelle (R) anfordert, wobei diese Einstellung durch alle diesen anfordernden Einheiten ($U_i$) zugeordneten Schnittstellenschaltungen ausgelöst wird ;

— ein zweites Signal (PERSO), dessen Einstellung auf den ersten Logikzustand (« 1 ») anzeigt, daß die Quelle keiner der Einheiten zugewiesen ist ; wobei dieses Signal durch diejenige Schnittstelle ($I_{Ai}$), welche der Einheit ($U_i$) zugeordnet ist, welcher die Quelle zugewiesen ist, auf den zweiten Zustand (« 0 ») eingestellt wird ;

— und ein drittes Signal (NCOUR), dessen Übergang vom ersten Logikzustand (« 1 ») in den zweiten Logikzustand (« 0 ») gleichzeitig den Beginn eines Wettbewerbs zwischen den anfordernden Einheiten freigibt, gefolgt von der Auswahl nur einer einzigen dieser Einheiten ($U_i$) zur Zuweisung der Quelle (R) und Untersagung der Berücksichtigung der auf den Übergang folgenden Zuweisungsanforderungen ; und dessen umgekehrter Übergang nach einer vorbestimmten Dauer ($T_{min}$) die ausgewählte Einheit freigibt und die Anzeige eines Binärwortes auf dem Mehrfachverbindungskanal auslöst, welches die Nummer der ausgewählten Einheit (NACT) darstellt, sowie die erneute Berücksichtigung der Zuweisungsanforderungen für die Quelle (R) veranlaßt ; wobei der Übergang vom ersten Logikzustand (« 1 ») in den zweiten Logikzustand (« 0 ») durch wenigstens eine Schnittstellenschaltung veranlaßt wird, die zuvor festgelegte Bedingungen zur Auslösung dieses Überganges festgestellt hat ; wobei diese Bedingungen umfassen :

— die Einstellung des zweiten bedingten Steuersignals (PERSO), welches anzeigt, daß die Quelle (R) keiner Einheit zugewiesen ist, auf den ersten Logikzustand (« 1 ») ;

— die Einstellung des ersten bedingten Steuersignals (NDEMA), welches anzeigt, daß wenigstens eine Einheit die Zuweisung der Quelle (R) anfordert oder daß die maximale Zeitdauer ($T_{min}$) der letzten Einheit, der die Quelle zugewiesen wurde, auf den zweiten Logikzustand (« 0 ») ;

— und die Einstellung des ersten bedingten Steuersignals (NDEMA), welches anzeigt, daß wenigstens eine Einheit die Zuweisung der Quelle (R) verlangt, auf den zweiten Logikzustand (« 0 ») ; wobei der Übergang durch die Schnittstellen der anfordernden Einheiten hervorgerufen wird ;
und daß im Gleichlauf mit der Erzeugung des ersten Signals (NDEMA) durch jede der Schnittstellen, welche den die Zuweisung der Quelle verlangenden Einheiten zugeordnet sind, diese Schnittstellen auf dem Mehrfachverbindungskanal (BAR) ein Binärwort erzeugen und anzeigen, welches das der Einheit zugeordnete Prioritätsniveau (PRIO) darstellt, wobei die Quelle (R) derjenigen Einheit ($U_i$) zugewiesen wird, welche die höchste Augenblickspriorität aufweist.

2. Verfahren nach Anspruch 1, dadurch gekennzeichnet, daß zum Anzeigen einer Priorität folgende Schritte durchgeführt werden :

— die Behaftung jeder der Einheiten des Systems ($U_i$ bis $U_n$) mit einem Prioritätsniveau ;

— Anzeigen des Prioritätsniveaus (PRIO) der ersten Einheit, welcher die Zuweisung der Quelle (R) verlangt, auf dem Mehrfachverbindungskanal ;

— iterative Berechnung eines neuen Prioritätsniveaus (PRIO) durch alle die Zuweisung der Quelle anfordernden Einheiten durch dauernden Vergleich ihres Prioritätsniveaus mit dem letzten Prioritätsniveau, das auf dem Mehrfachverbindungskanal angezeigt wurde ;

— und Anzeige eines neuen Prioritätsniveaus (PRIO) auf dem Mehrfachverbindungskanal, wenn das Vergleichsergebnis anzeigt, daß das Prioritätsniveau der anfordernden Einheit größer ist als das zuvor angezeigte Prioritätsniveau.

3. Verfahren nach Anspruch 2, dadurch gekennzeichnet, daß die Behaftung einer Einheit mit dem neuen Prioritätsniveau (PRIO) dynamisch erfolgt, indem die Differenz zwischen der der anfordernden Einheit (NSTA) gegebenen Nummer und der Nummer der letzten Einheit berechnet wird, der die Quelle zugewiesen wurde (NACT).

4. Verfahren nach einem der Ansprüche 1 bis 3, dadurch gekennzeichnet, daß die Quelle (R) einer Einheit ($U_i$) für eine maximale Zeitdauer ($T_{min}$) zugewiesen wird und daß nach Ablauf dieser maximalen Zeitdauer die Quelle (R) wieder den die Zuweisung anfordernden Einheiten zur Verfügung gestellt wird.

5. Verfahren nach einem der Ansprüche 1 bis 4, dadurch gekennzeichnet, daß ferner die Aktivität einer Einheit, der die Quelle zugewiesen wurde, durch ein Synchronisationssignal (NSYNMEN) taktgesteuert wird, welches aufeinanderfolgende Arbeitsperioden (T) und Ruheperioden definiert, und daß der Übergang des dritten bedingten Steuersignals (NCOUR) vom ersten Logikzustand (« 1 ») in den zweiten (« 0 ») unter der Steuerung der Schnittstelle ($I_{Ai}$) geschieht, welche derjenigen Einheit ($U_i$) zugeordnet ist, die im voraus während der letzten Arbeitsperiode im Gleichlauf mit der Feststellung des ersten bedingten Steuersignals (NDEMA) aktiv ist, welches auf den zweiten Logikzustand (« 0 ») eingestellt ist und anzeigt, daß wenigstens eine Einheit die Zuweisung der Quelle (R) verlangt.

6. Verfahren nach einem der Ansprüche 1 bis 5, dadurch gekennzeichnet, daß, wenn eine Einheit, der die Quelle zugewiesen war, erneut die Zuweisung der Quelle (R) verlangt und überdies das höchste Prioritätsniveau (PRIO) aufweist, nachdem seine neue Anforderung beim Übergang des dritten bedingten Steuersignals (NCOR) vom ersten Logikzustand (« 1 ») auf den zweiten (« 0 ») berücksichtigt wurde, die Auswahl freigegeben wird und die Einheit zu dem aktiven Zustand im voraus vor dem umgekehrten Übergang des dritten bedingten Steuersignals (NCOUR) zurückkehrt.

7. Verfahren nach einem der Ansprüche 1 bis 6, dadurch gekennzeichnet, daß die zuzuweisende Quelle (R) ein Mehrfachverbindungskanal (BUS) für den Austausch von Digitaldaten zwischen den Einheiten ($U_1$ bis $U_n$) ist und daß die Dauer der Arbeitsperiode (T) des Synchronisationssignals (NSYNMEN) der Zeit entspricht, die erforderlich ist, um eine Datenüberführung zwischen zwei an den Kanal (BUS) angekoppelten Einheiten durchzuführen.

8. Vorrichtung zur Zuweisung einer Quelle zu einer der Einheiten ($U_1$ bis $U_n$) eines Systems (S) nach dem Verfahren gemäß einem der Ansprüche 1 bis 7 ; dadurch gekennzeichnet, daß die jeweils einer der Einheiten ($U_1$) zugeordneten Schnittstellenschaltungen ($I_{Ai}$) mit einem Mehrfachvervindungskanal (BAR) verbunden sind, der einen ersten, einen zweiten und einen dritten bidirektionalen einfachen Verbindungsleiter umfaßt, auf dem das erste (NDEMA) bzw. das zweite (PERSO) bzw. das dritte (NCOUR) bedingte Steuersignal befördert werden wobei ein erstes Leiterbündel für bidirektionale Mehrfachverbindungen das Binärwort befördert, welches das höchste Augenblicksprioritätsniveau (PRIOR) darstellt, welches durch die Schnittstellenschaltungen berechnet wurde, und ein zweites Leiterbündel für bidirektionale Mehrfachverbindungen das Binärwort befördert, welches die Nummer derjenigen Einheit darstellt, der die Quelle zugewiesen wurde (NACT), und daß ferner die Schnittstellenschaltungen an die Leiter über Logik-Sendeelemente mit Halbleiterübergängen vom Typ mit offenem Kollektor angekoppelt sind, so daß der zweite Logikpegel (« 0 ») gegenüber dem ersten Logikpegel (« 1 ») überwiegt.

9. Vorrichtung nach Anspruch 8, dadurch gekennzeichnet, daß die Schnittstellenschaltungen ($I_{Ai}$) von der ihnen zugeordneten Einheit ($U_i$) ein Binärwort empfangen, welches ihre Nummer (NSTA) darstellt, und daß diese Nummer durch Elemente mit verdrahteter Logik erzeugt wird.

10. Vorrichtung nach Anspruch 8, dadurch gekennzeichnet, daß die Schnittstellenschaltungen ($I_{Ai}$) der ihnen zugeordneten Einheit ($U_i$) ein Zeitbasissignal (TIMEOUT) zuführen, welches anzeigt, daß die maximale Zeitdauer (T) die ihnen eingeräumt wird, abgelaufen ist, und daß dieses Signal durch eine Elektronikschaltung erzeugt wird, die eine monostabile Kippschaltung (807) umfaßt, welche durch ein Signal (NVAINS) angesteuert wird, das anzeigt, daß die Einheit ausgewählt und zum Beginnen der Aktivität freigegeben wurde, wobei die maximale Zeitdauer (T) durch den Wert der elektrischen Kapazität eines der monostabilen Kippschaltung zugeordneten Kondensators bestimmt wird.

11. Vorrichtung nach Anspruch 12, dadurch gekennzeichnet, daß die Schaltung zur Erzeugung des Zeitbasissignals (TIMEOUT) ferner eine Logik-Torschaltung (NOR, 806) umfaßt, welche die effektive Aussendung des Zeitbasissignals (TIMEOUT) von der Einstellung des ersten bedingten Steuersignals (NDEMA) auf den zweiten Logikzustand (« 0 ») abhängig macht.

12. Vorrichtung nach Anspruch 9, dadurch gekennzeichnet, daß die Schnittstellenschaltung einen Prioritätsniveau-Berechnungsblock (60) enthält, welcher einen ersten nichtflüchtigen Speicher (PRIOR-1, 700) enthält, der durch ein Binärwort adressiert wird, welches das die Nummer der zugeordneten Einheit darstellende Binärwort (NSTA) mit dem Binärwort (NACT) kombiniert, das die Nummer der letzten Einheit darstellt, welcher die Quelle zugewiesen wurde, und daß die Ausgangssignale ($a_0$-$a_3$) dieses ersten Speichers die relative Augenblickspriorität der zugeordneten Einheit ($U_1$) darstellen.

13. Vorrichtung nach Anspruch 12, dadurch gekennzeichnet, daß das Prioritätsniveau-Berechnungsorgan (60) ferner Logikelemente (703 bis 707) enthält, welche einerseits das dritte Signal (NCOUR) und andererseits ein Binärsignal empfangen, das von der zugeordneten Einheit (DMB) gesendet wird und anzeigt, daß diese die Zuweisung der Quelle anfordert, wenn es in seinem ersten Logikzustand (« 1 ») ist, wobei ein speicherndes Logikelement (706) ansprechend auf den Übergang des dritten bedingten Steuersignals (NCOUR) vom ersten (« 1 ») in den zweiten (« 0 ») Logikzustand ein dauerndes Binärsignal (PART) erzeugt, welches die Teilnahme der Einheit an der gerade stattfindenden Auswahl anzeigt ; und daß die Ausgangssignale des ersten Speichers (PRIOR-1, 700) sowie das Teilnahme-Binärsignal (PART) die Eingangssignale einer Schaltung (707-701) zur Erzeugung des Prioritätswortes sind, die einen zweiten nichtflüchtigen Speicher (PRIOR-2, 701) enthält ; wobei die Ausgänge dieser Schaltungen auf entsprechende Leiter der Leiter des Bündels gegeben werden, welches das Binärwort befördert, das das höchste Augenblicksprioritätsniveau darstellt (PRIO-0 bis PRIO-7), und der Prioritäts-Berechnungsblock (60) ferner ein Logikelement (MULTIPLEXER 702) enthält, der ein Binärsignal (NVAIN) erzeugt, dessen zweiter Logikzustand (« 0 ») anzeigt, daß die zugeordnete Einheit ($U_1$) das höchste Augenblicksprioritäts-niveau aufweist.

14. Vorrichtung nach Anspruch 12, dadurch gekennzeichnet, daß ferner der Prioritätsniveau-Berechnungsblock (60) Logikelemente (709 bis 712) enthält, die es gestatten, ein die Nummer der zugeordneten Einheit darstellendes Binärwort über die Leiter zu übertragen, die dem Bündel entsprechen, welches das Wort befördert, das die Nummer der Einheit darstellt, welcher die Quelle (R) ansprechend auf ein Freigabeisignal (VCARTE) zugeordnet wurde, und daß dieses Freigabesignal durch ein Logikelement (903) erzeugt wird, die das Signal (NVAIN) speichert, welches anzeigt, daß die zugeordnete Einheit ($U_i$) das höchste Augenblicksprioritätsniveau in dem Moment aufweist, wo der Übergang des dritten bedingten Steuersignals (NCOUR) wom ersten Logikzustand (« 1 ») in den zweiten (« 0 ») erfolgt.

15. Vorrichtung nach Anspruch 8, dadurch gekennzeichnet, daß jede Einheit ($U_1$ bis $U_n$) ferner einen Taktimpulssignal-Generator bestimmter Frequenz umfaßt, wobei diese Einheiten den Schnittstellen-schaltungen ($I_{Ai}$ bis $I_{An}$), die ihnen zugeordnet sind, Impulssignale der doppelten Taktfrequenz ($2H_i$) zusenden, und daß die Schnittstellenschaltung ($I_{Ai}$) Logikelemente umfaßt, die das dauernde Binärsignal (ACTIF) erzeugen, welches zu der zugeordneten Einheit übertragen wird, um einen Aktivitätszustand der Schnittstelle nach ihrer Auswahl anzuzeigen ; wobei die Logikelemente ein Speicherelement (902) enthalten, welches das Signal synchronisiert, das beim ersten Übergang des Impulssignals doppelter Frequenz ($2H_i$) erzeugt wird, das nach dem Übergang des dritten bedingten Steuersignals (« NCOUR ») vom ersten (« 1 ») in den zweiten (« 0 ») Logikzustand auftritt.

16. Vorrichtung nach Anspruch 15, dadurch gekennzeichnet, daß die Elemente ein Speicherelement (902) enthalten, welches das Signal synchronisiert, das beim ersten Übergang des Impulssignals doppelter Frequenz ($2H_i$) erzeugt wird, der nach dem Übergang des dritten bedingten Steuersignals (« NCOUR ») vom ersten (« 1 ») in den zweiten (« 0 ») Logikzustand auftritt.

17. Vorrichtung nach einem der Ansprüche 14 bis 16, dadurch gekennzeichnet, daß die speichernden Logikelemente bistabile Kippschaltungen vom D-Typ sind.

# FIG.1

# FIG.2

0 063 972

# FIG.3

# FIG.4

2

# FIG.5

FIG.6

FIG.7

# FIG. 8

NCOUR

"0" D Pr Q 800

2Hi H Cl Q̄

NVAINS

801 802 805

PERSO

803 804 "1"

ACTIF ACTIF̄

DMB NDEMA

806

C

TIMEOUT

MONOSTABLE

N̄V̄ĀĪN̄S̄ 807 61

0 063 972

6

FIG.9

FIG.10

# FIG. 11

NCOUR

Tmin

AFFICHAGE N°
PROCESSEUR
VAINQUEUR

AFFICHAGE NIVEAU PRIORITE
DES PROCESSEURS DEMANDEURS

NDEMA

PERSO

# FIG. 12

tmin

ACTIF

DMB

NSYNMEM

T

A          B          C

# FIG.13

# FIG.14

recouvrement

# FIG.15

# FIG.16

# FIG.17

PROCESSEUR "a"

PROCESSEUR "b"

0 063 972

# FIG.18

DEBUT

NON — DmB="1" — OUI
180

184
NON — LIBR="1" — OUI

185
NON — ACTIF="1" — OUI
NVAIN="0" 186 OUI
NON

181
ACTIF="1" — OUI
NON
182
PERSO="1" — NON
OUI
183
NCOUR="0"
NON

DECLENCHEMENT
DE LA COURSE
SUR LE PREMIER
FRONT DE 2Hi
187

ATTENTE UNE
PERIODE
188

189
OUI — NSYNMEM
= 0
NON

REMONTEE
DE NCOUR
190

FIN